# FASCICULE DE BREVET EUROPEEN

(11) **EP 1 080 001 B1**
(45) Date de publication et mention de la délivrance du brevet: **23.04.2003**
(21) Numéro de dépôt: 99920938.0
(22) Date de dépôt: 28.05.1999
(51) Int. Cl.: B60T 7/06, B60R 21/09

(54) **DISPOSITIF DE COMMANDE D'UN ORGANE D'UN VEHICULE AUTOMOBILE AU MOYEN D'UNE PEDALE**
STEUERVORRICHTUNG EINES KRAFTFAHRZEUGORGANS MIT HILFE VON EINEM PEDAL
DEVICE FOR CONTROLLING A MOTOR VEHICLE ELEMENT VIA A PEDAL

(30) Priorité: 29.05.1998 FR 9806857
(43) Date de publication de la demande: 07.03.2001
(73) Titulaire: SOCIETE FINANCIERE D'ETUDE ET DE DEVELOPPEMENT INDUSTRIEL ET TECHNOLOGIQUE - SOFEDIT, 78280 Guyancourt (FR)
(72) Inventeur: HAUGUEL, Fabrice, F-95250 Beauchamp (FR); LOUKILI, Azzédine, F-95220 Herblay (FR); DESLANDES, Max, F-78690 Les Essarts Le Roi (FR)
(74) Mandataire: Schrimpf, Robert
(86) Numéro de dépôt international: FR9901257
(87) Numéro de publication internationale: WO99062748

(56) Documents cités:
- DE-A- 4 340 633
- DE-A- 19 501 680
- DE-A- 19 515 852
- DE-C- 19 617 372
- FR-A- 2 750 093

## Description

La présente invention concerne un dispositif de commande, au moyen d'une pédale, d'un organe d'un véhicule automobile, notamment un organe de freinage, du type comportant :
- des moyens de liaison mécanique articulée entre la pédale et d'une part une contrepartie solidaire du véhicule, notamment une partie de plancher ou de tablier du véhicule, d'autre part ledit organe, lesdits moyens de liaison mécanique articulée étant réalisés de telle sorte que l'application d'une poussée de valeur déterminée, dans un sens déterminé, à la pédale provoque un actionnement déterminé dudit organe en mettant en oeuvre des contraintes de valeur respective déterminée et de sens respectif déterminé, dans des zones respectives déterminées desdits moyens de liaison mécanique articulée,
- des moyens de sécurité passive, comportant des moyens de détection d'une décélération du véhicule, propres à émettre un signal de commande lorsque la valeur de ladite décélération excède un seuil prédéterminé, correspondant à un risque que la valeur de ladite poussée excède un premier seuil déterminé, considéré comme dangereux pour le conducteur du véhicule, des moyens pyrotechniques commandés par ledit signal de commande pour provoquer un dégagement de gaz sous pression à la réception de celui-ci, et des moyens, commandés par ledit dégagement de gaz sous pression, pour favoriser alors un escamotage de la pédale par affaiblissement de l'une desdites zones déterminées vis-à-vis desdites contraintes respectives.

Un tel dispositif a pour but d'éviter qu'en cas d'impact du véhicule vers l'avant sur un obstacle, se traduisant par une décélération brutale du véhicule, la pédale impose au pied du conducteur une poussée risquant de blesser ce dernier.

A cet effet, dans leurs modes de réalisation actuellement connus, les dispositifs de ce type sont conçus de telle sorte que le dégagement de gaz sous pression à la réception du signal de commande, caractéristique d'une décélération considérée comme excessive, provoque purement et simplement la destruction (demande de brevet allemand DE 195 15 852 A1) ou l'escamotage (brevets DE 195 01 680 C2 et 196 17 372 C1) d'une zone par laquelle des contraintes sont nécessairement transmises lorsque le pied du conducteur applique une poussée à la pédale dans le sens propre à provoquer l'actionnement de l'organe à commander, tel qu'un organe de freinage.

La zone dans laquelle s'effectue cette destruction ou cet escamotage peut être choisie à volonté et, par exemple, se situe à l'articulation d'un levier portant la pédale sur la contrepartie solidaire du véhicule, ou à l'articulation de ce levier avec une biellette assurant sa liaison fonctionnelle avec l'organe à commander, tel qu'un organe de freinage, ou encore sur cette biellette elle-même.

Certes, dans ses différents modes de réalisation actuellement connus, le dispositif en question permet d'éviter l'application d'efforts excessifs à la jambe du conducteur par la pédale, en autorisant purement et simplement un escamotage de celle-ci, mais il présente un inconvénient important en ce que, dès lors que les moyens pyrotechniques ont fonctionné, le conducteur est privé de toute possibilité d'actionner l'organe commandé par l'application d'une poussée à la pédale.

Or, en particulier lorsque l'organe ainsi commandé est un organe de freinage, cette impossibilité peut se traduire par un danger en ce sens que, même s'il y a eu impact, dans des conditions propres à actionner les moyens pyrotechniques, le véhicule peut dans certains cas poursuivre sa route. si bien que le besoin de freinage subsiste. En outre, on ne peut exclure totalement un risque de dysfonctionnement des moyens pyrotechniques commandés, c'est-à-dire un fonctionnement de ces derniers en dehors d'un impact, ce qui fait disparaître toute possibilité de freinage alors que le besoin subsiste dans un tel cas également.

Pour tenter de remédier à ces inconvénients, on a proposé de pallier l'escamotage pyrotechnique de tourillons d'articulation de la pédale sur sa contrepartie solidaire du véhicule par une retenue au moyen de câbles (brevet allemand DE 195 01 680 C2), mais la retenue ainsi assurée ne peut être véritablement efficace que si le conducteur a gardé le pied sur la pédale pendant le fonctionnement des moyens pyrotechniques, pour maintenir les câbles en tension et, même dans un tel cas, un seul actionnement du frein reste possible après l'escamotage pyrotechnique des tourillons.

Le but de la présente invention est de remédier à ces inconvénients, c'est-à-dire de conserver au conducteur, après le fonctionnement des moyens pyrotechniques, une possibilité d'actionner à volonté l'organe commandé par l'intermédiaire de la pédale à condition, du moins, que la poussée qu'il applique à cet effet sur la pédale, c'est-à-dire qu'il reçoit en réaction de celle-ci, ne dépasse pas un seuil déterminé, afin de préserver une protection des jambes de l'utilisateur contre une poussée excessive reçue par l'intermédiaire de la pédale.

A cet effet, le dispositif selon l'invention, du type indiqué en préambule, se caractérise
en ce que les moyens pour favoriser un escamotage de la pédale comportent :
- dans l'une desdites zones, un affaiblissement localisé vis-à-vis desdites contraintes respectives, de telle sorte que ladite zone soit en elle-même suffisamment résistante, mécaniquement, pour résister auxdites contraintes respectives lorsque la valeur de ladite poussée est inférieure à un deuxième seuil déterminé, inférieur au premier seuil déterminé et considéré comme maximal dans des conditions normales de fonctionnement, mais insuffisamment résistante, mécaniquement, pour résister auxdites contraintes respectives lorsque la valeur de ladite poussée dépasse le deuxième seuil déterminé,
- dans la même desdites zones, un renfort localisé vis-à-vis desdites contraintes respectives, de telle sorte que, dans leur combinaison, ladite zone et le renfort soient suffisamment résistants, mécaniquement, pour résister auxdites contraintes respectives lorsque la valeur de ladite poussée dépasse le premier seuil déterminé,
   et en ce que les moyens pyrotechniques sont propres à rendre ledit renfort inopérant de façon commandée par ledit dégagement de gaz sous pression, de telle sorte qu'un freinage par application d'une poussée de valeur inférieure au deuxième seuil déterminé reste possible après ledit dégagement, mais que l'application d'une poussée de valeur supérieure au deuxième seuil déterminée après ledit dégagement provoque la rupture des dits moyens de liaison mécanique articulée au niveau dudit affaiblissement localisé et l'escamotage de la pédale.

On comprendra aisément que, dans un tel cas, le fonctionnement des moyens pyrotechniques, qu'il soit justifié par un impact ou résulte d'un dysfonctionnement, n'ote pas au conducteur la possibilité d'actionner l'organe commandé par la poussée sur la pédale, si bien que le véhicule peut être conduit normalement tant que le conducteur applique à la pédale une poussée de valeur considérée comme normale, c'est-à-dire tant que son pied reçoit de cette pédale une réaction considérée comme normale et non dangereuse. Ce n'est que dans l'hypothèse selon laquelle la poussée appliquée par le conducteur à la pédale, ou la réaction reçue de celle-ci par le pied du conducteur, dépasse le deuxième seuil déterminé, c'est-à-dire une valeur considérée comme maximale dans des conditions normales le fonctionnement du véhicule, que la zone affaiblie, dépourvue de son renfort lors du fonctionnement des moyens pyrotechniques, se rompt sous l'effet des contraintes qu'elle subit alors et libère la pédale vis-à-vis d'un escamotage, en privant ainsi le conducteur d'une possibilité d'actionnement de l'organe commandé par l'intermédiaire de cette pédale.

Un dispositif selon l'invention offre ainsi une sécurité considérablement accrue par rapport aux dispositifs du même type précédemment connus, sans pour autant être plus complexe ou plus coûteux et tout en restant compatible avec une large gamme de possibilités de choix de la zone affaiblie, doublée d'un renfort localisé rendu inopérant de façon commandée par le dégagement de gaz sous pression résultant du fonctionnement des moyens pyrotechniques.

Ainsi, selon un mode de mise en oeuvre de la présente invention, lesdits moyens de liaison mécanique articulée comportent un composant rigide incluant une paroi constituant l'une desdites zones, et ladite paroi est dédoublée localement pour délimiter une cavité étanche susceptible de recevoir ledit gaz sous pression, en une première partie de paroi susceptible de se rompre prioritairement sous l'effet dudit gaz sous pression et constituant ledit renfort et en une deuxième partie de paroi plus résistante que la première partie de paroi à l'effet dudit gaz sous pression et constituant ledit affaiblissement localisé.

Ce composant rigide peut être choisi librement parmi des composants soumis à des contraintes de traction, de compression, de flexion, de cisaillement par l'application de ladite poussée à la pédale dans des conditions normales d'actionnement de l'organe commandé par celle-ci, et consister par exemple en un palonnier de renvoi prévu entre certains moyens de liaison mécanique articulée entre une pédale et un organe commandé par celle-ci, notamment dans le cas de véhicules prévus pour être équipés indifféremment d'une direction à gauche ou d'une direction à droite, ou encore en une biellette ou un levier assurant une liaison mécanique dans la chaîne cinématique liant la pédale à l'organe commandé par celle-ci, ou encore en une chaise d'articulation d'un autre composant des moyens de liaison mécanique articulée sur la contrepartie solidaire du véhicule.

Dans le cas particulier dans lequel ledit composant rigide est une chaise solidaire de ladite contrepartie et portant la pédale de façon articulée, un mode de réalisation préféré de la variante précitée de mise en oeuvre de l'invention se caractérise en ce que le véhicule automobile comporte par ailleurs un support de colonne de direction passant à proximité immédiate de ladite chaise et susceptible d'accomplir un mouvement de rapprochement par rapport à celle-ci en cas de déformation du véhiculé automobile consécutivement à un impact, notamment par l'avent de celui-ci, et en ce que ladite chaise et le support de colonne de direction sont conformes de telle sorte que ledit mouvement de rapprochement se traduise par un contact mutuel augmentant lesdites contraintes dans ladite zone pour favoriser une rupture de ladite deuxième partie de paroi notamment après rupture de ladite première partie de paroi, sans entraîner de recul de la colonne de direction et du volant.

Ainsi, si le véhicule vient à se déformer après l'impact et la fragilisation de la paroi de la chaise par disparition de la première partie de paroi, ce qui témoigne de ce que le véhicule ne poursuit pas sa route après l'impact et l'actionnement des moyens pyrotechniques commandés, le mouvement de rapprochement mutuel entre le support de colonne de direction et la chaise qui s'ensuit provoque la rupture de la deuxième partie de paroi de la chaise après rupture de la première partie de cette paroi, c'est-à-dire l'escamotage de la pédale dans des conditions dans lesquelles il est hautement vraisemblable que le conducteur n'a plus besoin de freiner et dans lesquelles, par contre, il devient primordial de protéger les jambes du conducteur à l'encontre d'efforts trop importants.

Dans un autre mode de réalisation, lesdits moyens de liaison mécanique articulée comportant deux composants rigides localement Juxtaposés mutuellement suivant une direction déterminée perpendiculaire à un sens déterminé de transmission des contraintes respectives de l'un à l'autre, susceptibles de subir un déplacement relatif dans ledit sens mais liés mutuellement à l'encontre d'un tel déplacement relatif, par un arbre, respectivement une goupille, présentant un axe orienté suivant ladite direction, ledit arbre ou ladite goupille comportant au moins un tronçon en appui dans ledit sens sur l'un desdits composants et un tronçon d'appui de l'autre desdits composants dans ledit sens et constituant ladite une des dites zones à la transition entre lesdits tronçons. Ledit arbre ou ladite goupille comporte d'une part une partie radialement extérieure, de forme tubulaire, s'étendant de l'un à l'autre desdits tronçons, et d'autre part une partie radialement intérieure constituant ledit renfort au niveau de ladite transition, alors que la partie radialement extérieure constitue ledit affaiblissement au niveau de celle-ci, et délimitant à l'intérieur de ladite partie radialement extérieure une cavité étanche susceptible de recevoir ledit gaz sous pression, ladite partie radialement intérieure étant susceptible d'être chassée du niveau de ladite transition sous l'effet dudit gaz sous pression. A cet effet, par exemple, la partie radialement intérieure peut constituer un piston susceptible de coulisser à l'intérieur de ladite partie radialement extérieure et retenu au niveau de ladite transition par des moyens susceptibles de céder sous l'effet dudit gaz sous pression, ou encore être conçue de façon à éclater sous cet effet.

L'arbre prévu dans un tel cas travaille certes au cisaillement entre les deux composants qu'il relie, à la transition entre ces composants, mais ce travail au cisaillement peut résulter de différents modes de coopération des deux composants l'un avec l'autre par l'intermédiaire de l'arbre, qu'il s'agisse d'une solidarisation mutuelle par l'intermédiaire de ce dernier ou d'une articulation mutuelle des composants autour de l'axe de ce dernier. Ainsi, l'arbre en question peut assurer le montage articulé d'un levier portant la pédale sur la contrepartie solidaire du véhicule, ou encore la liaison articulée entre ce levier et une biellette de transmission de mouvement à l'organe commandé par la poussée appliquée à la pédale, ou encore toute autre articulation entre deux composants tels qu'un palonnier de renvoi et une biellette.

Les deux composants précités peuvent également être montés télescopiquement l'un par rapport à l'autre suivant une direction propre qui correspond audit sens déterminé de transmission dès contraintes respectives de l'un à l'autre et liés mutuellement, à l'encontre d'un déplacement relatif dans ledit sens, par ladite goupille présentant un axe orienté perpendiculairement à ladite direction, ladite goupille comportant au moins un tronçon en appui sur l'un desdits composants dans ledit sens et un tronçon d'appui de l'autre desdits composants dans ledit sens et constituant ladite une desdites zones à la transition entre lesdits tronçons. Les deux composants ainsi liés par la goupille peuvent par exemple constituer, dans les moyens de liaison mécanique articulée, une biellette rectiligne présentant une direction propre qui correspond au sens des contraintes respectives. Ladite goupille comporte d'une part une partie radialement extérieure de forme tubulaire, s'étendant de l'un à l'autre desdits tronçons, et d'autre part une partie radialement intérieure constituant ledit renfort au niveau de ladite transition, alors que la partie radialement extérieure constitue ledit affaiblissement au niveau de celle-ci, et délimitant à l'intérieur de ladite partie radiaiement extérieure une cavité étanche susceptible de recevoir ledit gaz sous pression, ladite partie radialement intérieure étant susceptible d'être chassée du niveau de ladite transition sous l'effet dudit gaz sous pression. A cet effet, par exemple, cette partie radialement intérieure peut constituer un piston susceptible de coulisser à l'intérieur de ladite partie radialement extérieure, sous l'effet dudit gaz sous pression, de façon à quitter ladite transition alors qu'il est retenu au niveau de ladite transition par des moyens susceptibles de céder sous l'effet dudit gaz sous pression, ou encore être susceptible d'éclater sous cet effet.

La biellette en question peut être soumise à des contraintes de traction ou de compression selon son implantation dans les moyens de liaison mécanique articulée entre la pédale et l'organe commandé par une poussée appliquée à cette dernière, et peut par exemple constituer la biellette traditionnellement prévue entre le levier portant la pédale et un amplificateur de freinage, en tant qu'organe commandé par application d'une poussée à la pédale. Selon que les contraintes subies par la biellette lors de l'application d'une telle poussée, dans des conditions normales de fonctionnement du dispositif, sont des contraintes de compression ou de traction, la rupture de la goupille se traduit par un raccourcissement apparent ou un allongement apparent de la biellette, alors que la pédale s'escamote sous l'effet de la poussée qui lui est appliquée par le pied du conducteur.

On peut alors avantageusement prévoir que ladite biellette, ou plus généralement l'ensemble formé par les deux composants, comporte en outre un ressort de sollicitation élastique de l'un desdits composants par rapport à l'autre dans ledit sens, de façon à provoquer un effacement de la pédale après rupture de la partie radialement extérieure de la goupille.

On est ainsi assuré de ce que la pédale s'efface effectivement, sans risquer de venir blesser l'utilisateur.

En outre, de préférence, on prévoit que ladite biellette ou ledit ensemble formé par les deux composants comporte des moyens de butée mutuelle desdits composants après franchissement d'une course longitudinale déterminée de l'un par rapport à l'autre dans ledit sens de façon à conserver une possibilité d'actionnement de l'organe de freinage par la pédale après rupture de la partie radialement extérieure de la goupille.

Il est bien entendu, toutefois, que le conducteur ne dispose plus alors de la course d'actionnement de la pédale dont il dispose habituellement, c'est-à-dire dans des conditions normales de fonctionnement du véhicule.

On notera que, lorsque la rupture de la liaison mécanique entre la pédale et l'organe à commander par une poussée appliquée à cette dernière résulte de la rupture d'un arbre ou d'une goupille par cisaillement à la transition entre deux composants, on peut favoriser ce cisaillement en ménageant dans ladite partie radialement extérieure de l'arbre ou de la goupille une amorce de rupture au niveau de ladite transition, par exemple sous forme d'une gorge annulaire continue ou discontinue.

Afin d'éviter au conducteur la sensation d'un escamotage brutal de la pédale si, après fonctionnement des moyens pyrotechniques, il vient à appliquer à cette pédale une poussée dont la valeur dépasse le deuxième seuil prédéterminé, on peut prévoir des moyens pour freiner cet escamotage.

Ces moyens peuvent se présenter sous diverses formes, aisément concevables par un homme de métier, mais ils sont présents de façon inhérente dans un autre mode de réalisation du dispositif selon l'invention, qui se caractérise en ce que les dits moyens de liaison mécanique articulée comportent deux composants rigides, localement juxtaposés mutuellement suivant une direction déterminée perpendiculaire à un sens déterminé de transmission des contraintes respectives de l'un à l'autre, guidés mutuellement vis-à-vis d'un déplacement relatif dans ledit sens mais liés mutuellement, à l'encontre d'un tel déplacement relatif, d'une part par effet de friction, dans ledit sens, dans une zone de contact mutuel constituant ladite une desdites zones et d'autre part par effet de butée, dans ledit sens, d'une saillie qu'un premier desdits composants présente suivant ladite direction contre une contrepartie que présente le second desdits composants, et en ce que les moyens pyrotechniques sont agencés de telle sorte que ledit dégagement de gaz sous pression provoque la disparition dudit effet de butée.

Dans un tel cas, l'effet de butée assure, conjointement ou non avec l'effet de friction, la transmission des contraintes correspondant à l'application, à la pédale, d'une poussée de valeur supérieure au premier seuil déterminé et, lorsque l'effet de butée disparaît du fait du fonctionnement des moyens pyrotechniques , l'effet de friction reste seul à assurer cette transmission tant que la poussée appliquée à la pédale ne dépasse pas le deuxième seuil déterminé mais il est insuffisant pour assurer cette transmission si la poussée appliquée à la pédale dépasse cette valeur ; si tel est le cas, la pédale s'escamote, mais ceci de façon freinée par l'effet de friction.

Diverses variantes de réalisation de cet autre mode de réalisation peuvent être envisagées.

L'une des variantes se caractérise en ce que le ledit premier composant et /ou la dite saillie délimitent une cavité étanche susceptible de recevoir ledit gaz sous pression et en ce que ladite saillie est susceptible de se détacher dudit premier composant sous l'effet dudit gaz sous pression.

Une autre ce ces variantes se caractérise en ce que ledit second composant et/ou la dite contrepartie délimitent une cavité étanche susceptible de recevoir ledit gaz sous pression et en ce que ladite contrepartie est susceptible de s'escamoter vis-à-vis de ladite saillie sous l'effet du dit gaz sous pression.

Encore une autre de ces variantes se caractérise en ce que ladite saillie et/ou la dite contrepartie présentent une forme en coin , en ce qu'une première d'entre elles est liée rigidement au composant correspondant alors que la seconde d'entre elles est liée au composant correspondant de façon à pouvoir s'escamoter dans le sens de la disparition dudit effet de butée par rapport à ladite première, en opposant ledit effet de friction par contact avec celle-ci, et en ce que le composant correspondant à ladite seconde comporte un piston mobile entre une position de retenue de ladite seconde dans une position correspondant audit effet de butée et une position de libération de ladite seconde vis-à-vis d'un escamotage dans le sens de la disparition dudit effet de butée et délimite avec ledit piston une cavité étanche susceptible de recevoir ledit gaz sous pression, le piston étant susceptible de passer de sa position de retenue à sa position de libération sous l'effet dudit gaz sous pression.

L'escamotage précité peut s'accompagner d'une déformation élastique ou d'une déformation plastique de la liaison entre la saillie ou sa contrepartie, respectivement, et le composant correspondant dès lors que cette liaison oppose à l'escamotage une résistance suffisante pour préserver l'effet de freinage après disparition de l'effet de butée.

Par exemple, dans le cas de ce mode de réalisation de l'invention, notamment de chacune des variantes précitées, les deux composants précités peuvent avantageusement se situer à l'articulation entre un levier portant la pédale et une biellette de transmission de mouvement à l'organe commandé par la pédale, auquel cas l'un d'eux peut-être constitué par un bloc de butée sur lequel est articulée cette biellette et l'autre par un logement recevant ce bloc de butée en le guidant au coulissement dans une direction correspondant au sens de transmission des contraintes du bloc de butée à la biellette, à l'encontre de l'effet de butée lorsqu'il est présent et de l'effet de friction.

L'invention sera mieux comprise si l'on se réfère à la description ci-dessous, relative à quelques exemples non limitatifs de mise en oeuvre, ainsi qu'aux dessins annexés qui font partie intégrante de cette description.

La figure 1 montre une vue en élévation d'un dispositif de commande de freinage au moyen d'une pédale, mettant en oeuvre l'invention selon un premier mode.

La figure 2 montre une vue en perspective de la chaise d'articulation de pédale conçue à cet effet dans ce cas.

La figure 3 montre un détail de cette chaise d'articulation, en coupe par un plan vertical de symétrie de la chaise d'articulation, repéré en III de la figure 2 et parallèle au plan de la figure 1.

La figure 4 montre un autre mode de mise en oeuvre de l'invention, en une vue partiellement en bout, par l'arrière, et partiellement en coupe selon un plan vertical repéré en IV-IV de la figure 1, perpendiculaire au plan de la figure 1et passant par l'axe de l'articulation de la pédale sur sa chaise d'articulation.

Les figures 5 et 6 illustrent des variantes d'exécution d'un détail repéré en V à la figure 4.

La figure 7 illustre, pour partie en élévation latérale comme à la figure 1 et en partie en coupe par le plan repéré en III à la figure 2, encore un autre mode de mise en oeuvre de la présente invention.

La figure 8 montre une vue de ce même mode de réalisation, en coupe par un plan approximativement horizontal, repéré en VIII-VIII à la figure 7 et perpendiculaire au plan de la figure 7.

Les figures 9 et 10 illustrent, en des vues analogues à celle de la figure 7, encore un autre mode de mise en oeuvre de la présente invention, selon deux variantes.

La figure 11 montre une vue partielle, agrandie d'un détail de la variante de la figure 10 en coupe par un plan repéré en XI-XI à la figure 10.

La figure 12 montre une vue partielle, agrandie d'un détail d'une troisième variante du mode de mise en oeuvre illustré aux figures 9 à 11, en une vue par ailleurs analogue à celles des figures 9 et 10.

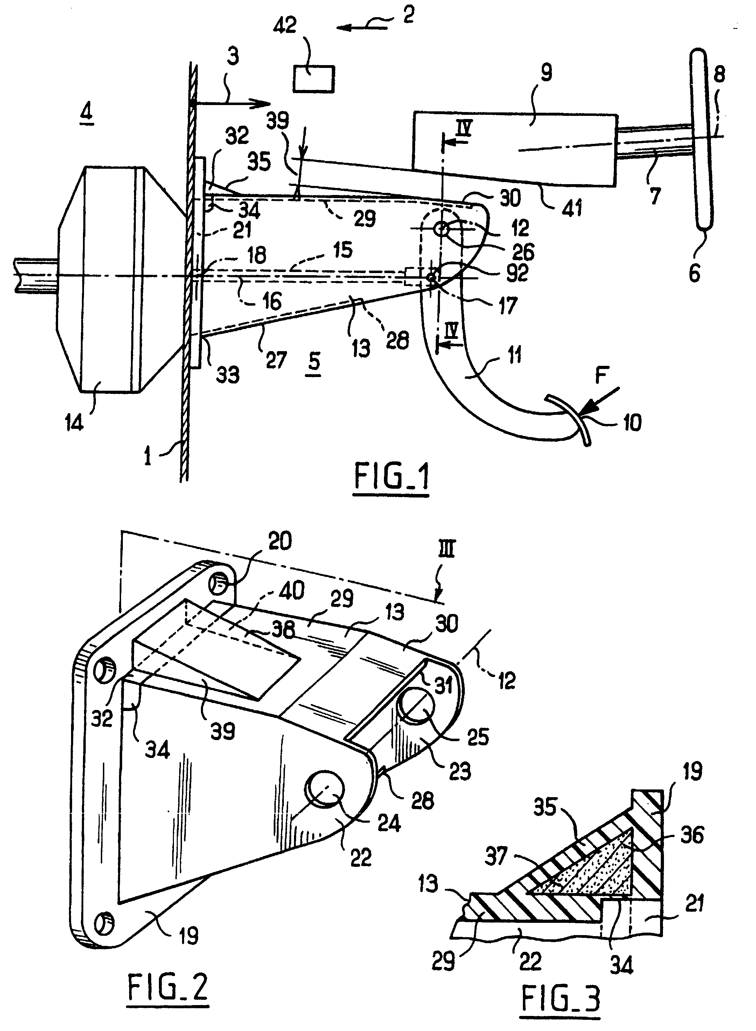

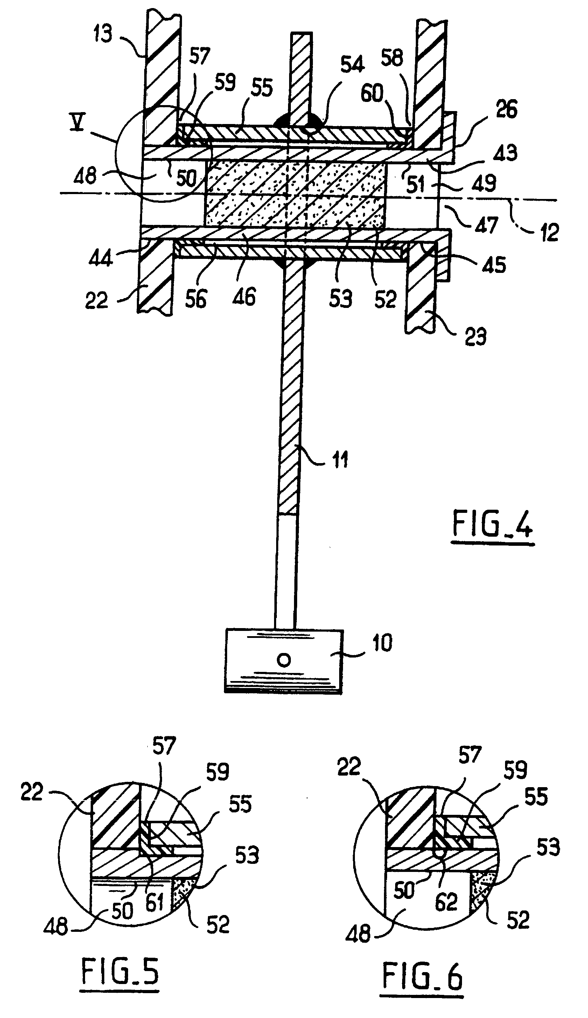

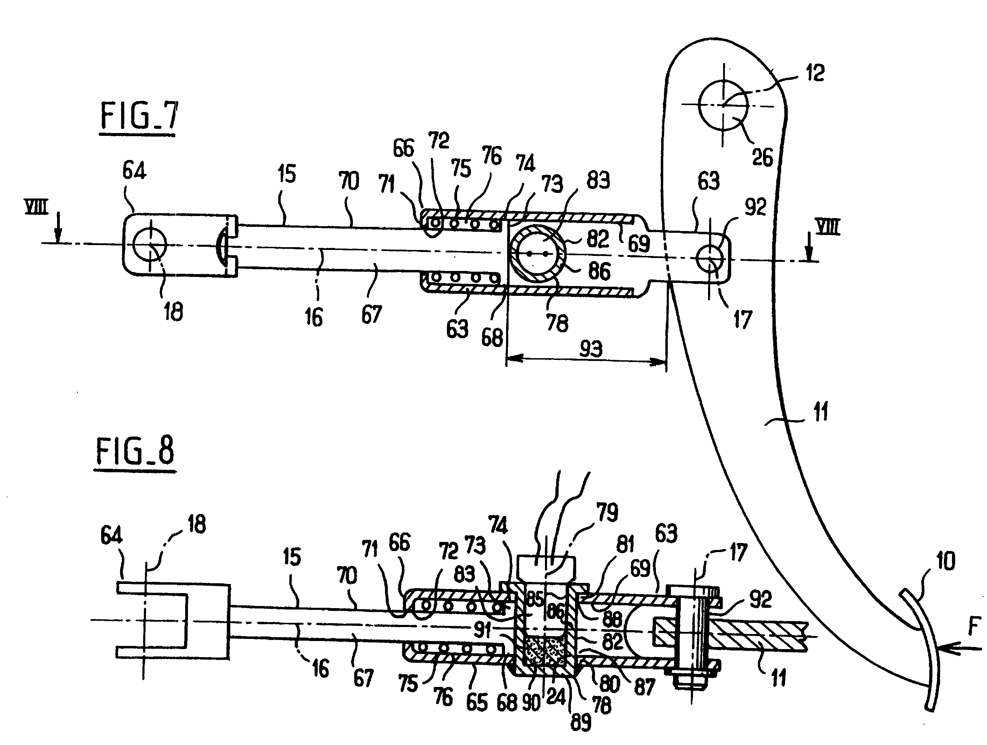

On se référera en premier lieu aux figures 1 à 3, et en particulier à la figure 1 où l'on a illustré l'ensemble d'un dispositif de commande d'un organe de freinage au moyen d'une pédale, mettant en oeuvre la présente invention dans un premier mode. Les composants de ce dispositif conserveront les mêmes références numériques en relation avec les modes de mise en oeuvre de l'invention décrits respectivement en relation avec les figures 4 à 6 et en relation avec les figures 7 et 8.

A la figure 1, on a désigné par 1 le tablier du véhicule automobile, non représenté par ailleurs, lequel tablier 1 présente la forme d'une paroi qui fait partie intégrante de la carrosserie du véhicule et qui, rigide et reliée rigidement au reste de la carrosserie du véhicule dans des conditions normales de roulement de celui-ci, peut être amenée à reculer, en référence à un sens 2 de marche avant du véhicule, en cas d'impact de ce dernier par l'avant, comme on l'a schématisé par une flèche 3 à la figure 1.

Le tablier 1 est plat, approximativement vertical et approximativement perpendiculaire au sens 2 et sépare l'un de l'autre un compartiment moteur 4, situé en avant de ce tablier 1 en référence au sens 2, et un habitacle 5 situé en arrière du tablier 1 et comportant notamment un poste de conduite schématisé par :
- un volant 6 solidaire d'une colonne de direction 7 montée à la rotation autour d'un axe 8 parallèle au plan de la figure 1 dans un support 9 raccordé à la carrosserie du véhicule de façon plus rigide que le tablier 1 de telle sorte que ce dernier se rapproche du support 9 dans son éventuel mouvement de déformation vers l'arrière, schématisé par la flèche 3, et
- par une pédale 10 solidaire d'une extrémité, ou extrémité inférieure d'un levier coudé 11 pour l'essentiel situé dans un plan parallèle au plan de la figure 1 et incluant l'axe 8 ou passant à proximité immédiate de celui-ci, lequel levier 11 présente par ailleurs une autre extrémité ou extrémité supérieure par laquelle il est articulé, autour d'un axe 12 perpendiculaire au plan de la figure 1, sur une chaise 13 disposée en dessous du support 9 et fixée de façon solidaire, par exemple par vissage, au tablier 1 en avant de ce support 9 mais en arrière de ce tablier 1 si l'on se réfère au sens 2.

A l'intérieur du compartiment moteur 4, c'est-à-dire vers l'avant en référence au sens 2, le tablier 1 porte par ailleurs, de façon solidaire, un organe de freinage représenté sous la forme d'un amplificateur de freinage 14 de type connu, commandant lui-même, de façon non illustrée mais bien connue d'un homme du métier, un système hydraulique de freinage. L'amplificateur 14 est raccordé au levier 11 à travers le tablier 1, par une biellette rectiligne 15 d'axe 16 approximativement horizontal, située dans le plan moyen du levier 11 et confondue avec le plan de coupe repéré en III de la figure 2. La biellette 15 est articulée respectivement sur le levier 11, en dessous de l'axe 12, et sur une tige non illustrée et non référencée de l'amplificateur 14, autour d'un axe respectif 17, 18 parallèle à l'axe 12 de telle sorte que l'application à la pédale 10 d'une poussée F tournée vers l'avant en référence au sens 2 et vers le bas se traduise, par basculement du levier 11 autour de l'axe 12 par rapport à la chaise 13, par l'application d'une poussée vers l'avant à la tige de l'amplificateur 14 et que cette dernière, convenablement sollicitée par des moyens de rappel connus en eux-mêmes, inclus dans l'amplificateur 14, provoque par l'intermédiaire de la biellette 15 et du levier 11 un retour de la pédale 10 à sa position initiale lorsque la poussée F cesse.

Dans le cas de ce mode de mise en oeuvre de l'invention, les dispositions caractéristiques de celle-ci sont prévues sur la chaise 13, qui va être décrite à présent plus en détail en référence à l'ensemble des figures 1 à 3.

La chaise 13, réalisée par exemple en une seule pièce d'une matière plastique appropriée, présente en vue de sa fixation sur le tablier 1 une zone formant bride 19, susceptible de s'appliquer à plat sur le tablier 1 et présentant en vue de la solidarisation de la chaise 13 avec celui-ci des trous de vissage 20. Autour de l'axe 16, la bride 19 délimite en l'entourant un trou 21 de passage de la tige de l'amplificateur 14 ou de la biellette 15 au niveau de leur raccordement articulé autour de l'axe 18.

Le trou 21 est par exemple carré et présente deux bords approximativement verticaux, et mutuellement symétriques par rapport au plan III, et deux bords approximativement horizontaux, l'un et l'autre perpendiculaires au plan III à raison d'un bord supérieur et d'un bord inférieur.

Le long de chacun de ces bords se raccorde en une seule pièce, à la bride 19, une paroi plane respective de la chaise 13, à raison de :
- deux parois latérales ou joues 22, 23 approximativement verticales, mutuellement parallèles et mutuellement symétriques par rapport au plan III, ces deux parois latérales 22, 23 étant sécantes de l'axe 12 autour duquel elles définissent un trou respectif 24, 25 de réception coaxiale d'un arbre 26 d'articulation du levier 11 autour de l'axe 12 par rapport à la chaise 13,
- une paroi inférieure 27 ascendante vers l'arrière en référence au sens 2, perpendiculaire au plan III et s'étendant vers l'arrière, en référence au sens 2, jusqu'à un bord 28 rectiligne, perpendiculaire à ce plan III et situé à un niveau inférieur à celui de l'axe 12 et suffisamment en avant de celui-ci, en référence au sens 2, pour ne pas gêner les mouvements du levier 11 correspondant à l'actionnement de l'amplificateur de freinage 14 par application d'une poussée F à la pédale 10, et
- une paroi supérieure 29 également perpendiculaire au plan III, approximativement horizontale et située à un niveau supérieur à celui de l'axe 12, cette paroi 29 présentant vers l'arrière, c'est-à-dire directement au-dessus de l'axe 12, un pan 30 également plan et perpendiculaire au plan III mais légèrement descendant vers l'arrière en référence au sens 2, jusqu'à un bord rectiligne 31 perpendiculaire au plan III et situé légèrement en arrière de l'axe 12 en référence au sens 2.

Les parois 27 et 29, y compris le pan 30, raccordent mutuellement les parois latérales ou joues 22, 23 de façon à former avec elles un ensemble rigide, lui-même raccordé rigidement à la bride 19.

Un homme du métier comprendra aisément que l'application d'une poussée F à la pédale 10 se traduit dans la chaise 13 par l'apparition de contraintes, et notamment de contraintes de traction dans la paroi 29, au niveau d'une zone 32 de raccordement de celle-ci avec la bride 19, et de contraintes de compression dans la paroi 27, au niveau d'une zone 33 de raccordement de celle-ci avec la bride 19, ce qui correspond à une tendance de la chaise 13 à basculer vers le bas par rapport au tablier 1 lorsqu'on applique la poussée F à la pédale 10.

Le raccordement des parois 22, 23, 27, 29 de la chaise 13 avec la bride 19 est prévu pour résister aux contraintes qui apparaissent ainsi, même lorsque la poussée F appliquée par le pied du conducteur à la pédale 10 atteint et dépasse un seuil prédéterminé, par exemple de l'ordre de 200 daN, au-delà duquel on considère qu'il existe un risque dominant de blessure du conducteur du fait de la réaction, de même direction, de même valeur mais de sens opposé, que son pied reçoit de la pédale 10.

Pour éviter une blessure du conducteur au cas où ce seuil viendrait à être dépassé, notamment en cas d'impact du véhicule par l'avant, une des zones 32 et 33, et par exemple la zone 32, est prévue pour s'affaiblir de façon commandée pyrotechniquement lorsqu'un capteur de décélération connu en lui-même et simplement schématisé en 42, par exemple prévu pour commander par ailleurs le déclenchement de coussins gonflables de sécurité, détecte que le véhicule subit une décélération dont la valeur est grande au point de faire courir ce risque. De façon caractéristique de la présente invention, la zone ainsi prévue pour s'affaiblir en cas d'impact est également prévue pour conserver une certaine possibilité de transmission de contraintes, à savoir des contraintes de traction dans la zone 32 choisie comme exemple, complétant les possiblités de transmission de contraintes par le raccordement des autres parois, à savoir les parois 22, 23 et 27, avec la bride 19, en elles-mêmes insuffisantes, de telle sorte qu'elle ne se brise pas et que les parois 22, 23, 27, 29 de la chaise 13 ne se détachent pas de la bride 19 par rupture de leur raccordement avec celle-ci tant que la poussée F effectivement appliquée par le conducteur à la pédale 10, ou la réaction de son pied reçoit de cette dernière, ne dépasse pas un autre seuil prédéterminé, considéré comme maximal dans des conditions normales de freinage, et par exemple un seuil de 80 daN.

Naturellement, ces chiffres de 80 daN et 200 daN , indiqués respectivement pour le plus faible F1 et le plus fort F2 de ces deux seuils prédéterminés, ne constituent que des exemples non limitatifs et d'autres chiffres pourront être choisis sans que l'on sorte pour autant du cadre de la présente invention.

En vue de la mise en oeuvre de celle-ci, alors que les parois 22 et 23, hormis à proximité immédiate de la zone 32, et la paroi 27, y compris au niveau de la zone 33, sont pleines et présentent une épaisseur sensiblement constante, la paroi 29, dans la zone 32, et les parois 22 et 23, à proximité immédiate de cette zone 32, c'est-à-dire à proximité immédiate de leur raccordement avec la bride 19 et la paroi 29, présentent localement la forme d'un voile 34 d'épaisseur moindre, c'est-à-dire de moindre résistance notamment vis-à-vis des contraintes de traction transmises dans cette zone 32 de la chaise 13, et la paroi 29 est doublée localement, en parallèle du voile 34 en ce qui concerne la transmission des contraintes, par une paroi formant tirant 35, d'épaisseur intermédiaire entre celle du voile 34 et l'épaisseur courante de la paroi 29 de façon à présenter vis-à-vis des contraintes de traction précitées également une moindre résistance, à savoir une résistance intermédiaire entre celle que la paroi 29 présente de façon courante et celle du voile 34.

Plus précisément, le voile 34 et le tirant 35 sont dimensionnés de telle sorte, que, ensemble, ils soient aptes à résister à des contraintes de traction d'une valeur correspondant à une poussée F excédant le plus élevé F2 desdits seuils prédéterminés mais que, si le voile 34 vient à disparaître, le tirant 35 ne puisse résister qu'à des contraintes de traction d'une valeur correspondant au maximum au plus faible F1 desdits seuils prédéterminés, et se rompre si les contraintes atteignent puis dépassent cette dernière valeur. La détermination des épaisseurs respectives du voile 34 et de la paroi 35 à cet effet, de même que celle que présentent le reste des parois 22 et 23 et la paroi 27 à leur raccordement avec la bride 19, relève des aptitudes normales d'un homme du métier.

Une rupture commandée du voile 34 est provoquée pyrotechniquement lorsque le capteur précité 42 constate que le véhicule subit une décélération susceptible d'entraîner un effort F, ou une réaction, dépassant le plus fort F2 desdits seuils prédéterminés et émet un signal caractéristique à cet égard. A cet effet, le tirant 35, placé au-dessus de la paroi 29, de façon symétrique par rapport au plan III, comporte une première partie plate 38 s'étendant en oblique, de façon ascendante vers l'avant, à partir de la paroi 29 et jusqu'à une zone de la bride 19 située au-dessus du trou 21, et deux parties 39 et 40 également plates, mutuellement symétriques par rapport au plan III, et raccordant mutuellement la partie 38, la bride 19 et la paroi 29 respectivement de part et d'autre de la paroi 38, et ces parties 38, 39, 40 comme le voile 34 et la partie de la paroi 29 située sous la partie 38 sont étanches et se raccordent mutuellement de façon étanche, de façon à délimiter une cavité étanche 36 enfermant une composition pyrotechnique 37 susceptible d'être enflammée par des moyens d'allumage non représentés, connus d'un homme du métier et commandés par le signal précité, émis par le capteur 42. La composition pyrotechnique 37 est choisie de telle sorte que sa combustion provoque à l'intérieur de la cavité 36 un dégagement gazeux dont la pression croît et, lorsqu'elle dépasse une valeur prédéterminée, provoque l'éclatement du voile 34, qui constitue un affaiblissement à cet égard en comparaison avec les parties 38, 39, 40 du tirant 35 et la partie de la paroi 29, correspondant à la cavité 36. Dans une variante non représentée, mais aisément concevable par un homme du métier, la composition pyrotechnique 37 pouvait être logée dans une cavité étanche extérieure à la cavité 36 et raccordée à celle-ci par un conduit étanche.

Après cet éclatement du voile 34, du moins dans sa partie placée en regard de la cavité 36, seuls subsistent dans la zone 32, comme opposant une résistance aux contraintes de traction précitées, le tirant 35 et les zones du voile 34 situées respectivement de part et d'autre du tirant 35, et ces parties de voile 34 conjointement avec le tirant 35 sont suffisantes pour transmettre les contraintes de traction précitées tant que la poussée F appliquée à la pédale 10 ou la réaction appliquée par cette dernière au pied du conducteur reste inférieure au plus faible F1 dudit seuil prédéterminé, mais elle est par ailleurs propre à se rompre si ce seuil F1 vient à être dépassé.

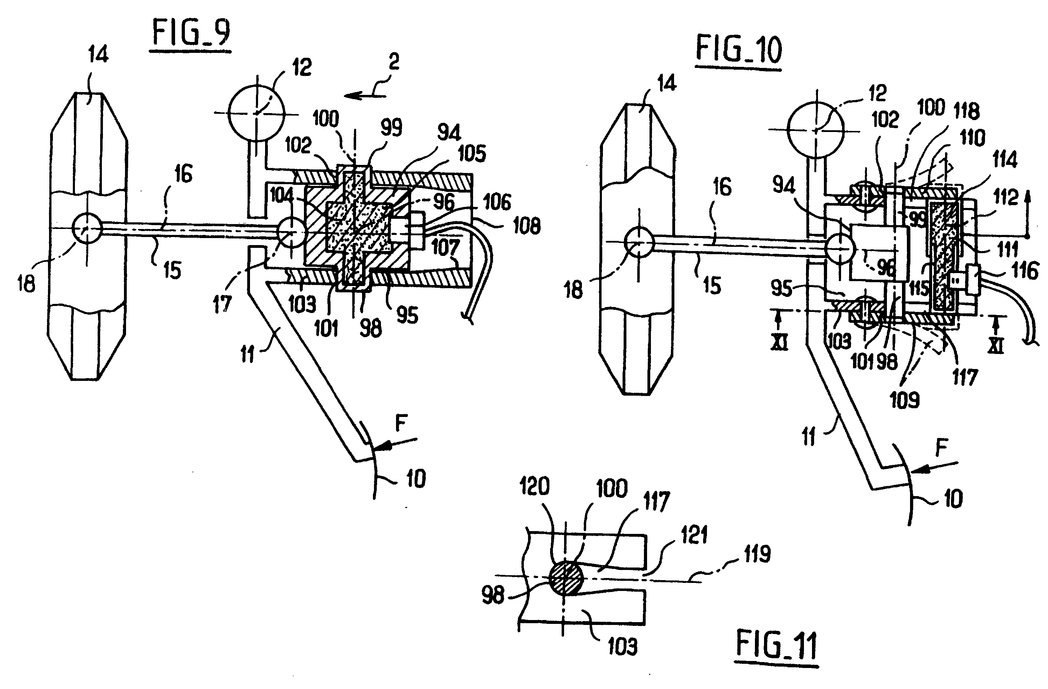

Ainsi, ce premier mode de mise en oeuvre de la présente invention fonctionne de la façon suivante :
- si le capteur 42 détecte une décélération du véhicule propre à entraîner un risque que la poussée F appliquée par le pied du conducteur à la pédale 10, ou la réaction que ce pied reçoit de la pédale 10, dépasse le seuil F2, par exemple de 200 daN, ce capteur provoque par émission du signal précité l'actionnement des moyens d'allumage de la composition 37 ; comme il ressort de la figure 9, cette phase initiale de décélération, jusqu'à l'actionnement des moyens d'allumage de la composition pyrotechnique 37, dure un temps t₁ qui peut être de l'ordre de 10 millisecondes et qui est déterminé de telle sorte que la valeur de F, croissant progressivement, ne puisse dépasser le seuil F2;
- à l'instant t₁, la composition pyrotechnique 37 est allumée, et la pression dans la cavité 36 dépasse le seuil de rupture du voile 34 à un instant t₂ postérieur de 2 millisecondes environ à l'instant t₁ ; entre les instants t₁ et t₂, le voile 34 commence à s'affaiblir si bien que la valeur maximale de la poussée F ou de la réaction à cette poussée F donnant lieu à des contraintes encore transmissibles par la zone 32 peut atteindre une valeur F3 qui dépasse à peine le seuil F2 dans la mesure où si la valeur F3 devait dépasser fortement celle de F2, le voile 34 et la paroi formant tirant 35 se rompraient sous l'effet des contraintes, du fait du choix de leurs épaisseurs respectives à cet effet ;
- à l'instant t₂, seule subsiste autour de la cavité 36 la paroi formant tirant 35, affaiblie par rapport au reste de la paroi 29 et à présent démunie du renfort que constituait le voile 34 ; si, à cet instant, la poussée F ou la réaction qui lui est opposée par la pédale 10 dépasse effectivement la valeur F1, par exemple de 80 daN, le tirant 35 et les parties de voile 34 qui subsistent de part et d'autre du tirant 35 se rompent également et la chaise 13 peut basculer par rapport à la bride 19, ce qui provoque l'effacement de la pédale vers le bas et vers l'avant et évite tout risque de blessure au conducteur ; cet effacement de la pédale 10 se produit à un instant t₃ dépassant par exemple de 5 millisecondes l'instant t₂ ; alors, plus aucun actionnement du dispositif de freinage n'est possible par le conducteur ; si, par contre, la poussée F ou la réaction que la pédale 10 lui oppose reste au plus égale à la valeur F1, le tirant 35 et les parties restantes du voile 34, respectivement de part et d'autre de ce tirant 35, sont suffisants pour transmettre les contraintes de traction correspondantes dans la zone 32, la chaise 13 reste en place et le conducteur peut continuer à utiliser normalement le frein ; il est toutefois bien entendu qu'alors, la chaise 13 se détachera de la bride 19 dès que l'effort F deviendra supérieur à F1.

Naturellement, la conception de la zone 33 pourrait être analogue à celle qui vient d'être décrite à propos de la zone 32 si cette zone 33 était choisie comme zone de rupture privilégiée au raccordement de la chaise 13 avec la bride 19.

Dans une variante également non représentée, on pourrait prévoir un effacement latéral de la chaise 13 dans des conditions de contraintes excessives correspondant à celles qui ont été indiquées à propos de la zone 32, en prévoyant une rupture au niveau du raccordement de l'une ou l'autre de ces parois 22, 23 avec la bride 19.

De façon particulièrement avantageuse, dans le cas de ce mode de réalisation, l'escamotage de la chaise 13 et, avec celle-ci, de la pédale 10 peut également résulter d'un mouvement de recul subi par le tablier 1, lors d'un impact du véhicule vers l'avant, par rapport au support 9 de la colonne 7 de direction.

A cet effet, dans l'exemple illustré dans lequel les dispositions caractéristiques de l'invention sont prévues dans la zone 32, le support 9 de la colonne de direction 7 présente, directement en regard et au-dessus du pan 30 de la paroi 29 de la chaise 13, une face inférieure plane 41 parallèle au pan 30 et respectant vis-à-vis de ce dernier un espacement 39 de valeur déterminée, lorsque la carrosserie du véhicule n'est pas déformée notamment sous l'effet d'un impact frontal.

La valeur de cet espacement 39 est choisie de telle sorte que, si le tablier 1 et, avec lui, la chaise 13 encore intacte reculent d'une distance prédéterminée par déformation de la carrosserie du véhicule sous l'effet d'un impact par l'avant, comme on l'a schématisé par la flèche 3 à la figure 1, le pan 30 vienne au contact de la face 41 du support 9, correspondant quant à lui à une partie encore non déformée du véhicule, à savoir la cellule délimitant l'habitacle de celui-ci, et que la poursuite de mouvement de recul que le tablier 1 et la chaise 13 subissent ainsi par rapport au support 9 se traduise par l'application, au pan 30 par la face 41 du support 9, d'une poussée dirigée vers le bas et présentant une valeur d'autant plus grande que l'amplitude du mouvement de recul du tablier 1 et de la chaise 13 est importante, jusqu'à ce que cet effort soit suffisant pour provoquer la rupture du raccordement de la chaise 13 à la bride 19 dans la zone 32, suivie d'un rabattement de la chaise 13 et de la pédale 10 vers le bas et vers l'avant.

Naturellement, des dispositions analogues pourraient être prévues en vue d'un effacement latéral de la chaise 13 et de la pédale 10, dans le cas où ce serait l'une des parois latérales ou joues 22, 23 qui serait affaiblie pyrotechniquement à son raccordement avec la bride 19.

Selon le cas, on peut choisir que cette rupture résultant d'un rapprochement du tablier 1 et de la chaise 13 vis-à-vis du support 9 s'effectue avant affaiblissement pyrotechnique du raccordement de la chaise 13 avec la bride 19, auquel cas le pan 30 et la face 41 doivent être conformés et disposés l'un par rapport à l'autre de telle sorte que l'atteinte de l'amplitude prédéterminée de recul du tablier 1 et de la chaise 13 devant entraîner la rupture provoque l'apparition, dans la zone 32, de contraintes de traction de même valeur que celles qui correspondent à l'application d'une poussée de valeur F₂ sur la pédale 10. On peut également prévoir que le basculement de la chaise 13 par contact avec le support 9 n'intervienne qu'après affaiblissement pyrotechnique de la zone 32, auquel cas la rupture de la zone 32 par contact du pan 30 de la paroi 29 avec la face 41 du support 9 doit résulter de l'apparition, dans la zone 32, de contraintes de traction de même valeur que celles qui correspondent à l'application d'une poussée de valeur F₁ à la pédale 10.

Naturellement, la localisation de la zone que l'on affaiblit pyrotechniquement pour faciliter sa rupture en cas d'impact par l'avant peut être choisie non seulement au niveau du raccordement de la chaise 13 avec la bride 19 de fixation sur le tablier 1, mais également dans toute zone dans laquelle l'application d'une poussée F sur la pédale 10 provoque l'apparition de contraintes de traction, ou de compression, ou de cisaillement, ou même de flexion dont la valeur croît avec celle de la poussée F.

Ainsi, à titre d'autres exemples non limitatifs de localisation de cette zone, on a illustré aux figures 4 à 6 une localisation au niveau de l'arbre 26 d'articulation du levier 11 de la pédale sur la chaise 13, et aux figures 7 et 8 une localisation au niveau de la biellette 15. Pour des raisons de simplicité, on a conservé aux figures 4 à 6 et aux figures 7 et 8 les mêmes références qu'aux figures 1 à 3 pour désigner des composants identiques ou similaires, étant entendu que, si l'on excepte la localisation de la zone destinée à être affaiblie pyrotechniquement en cas d'impact du véhicule par l'avant, les dispositifs de freinage auxquels correspondent les figures 4 à 6 et les figures 7 et 8 sont identiques à celui qui a été illustré à la figure 1, et peuvent connaître les mêmes variantes d'exécution pratique.

On se référera en premier lieu aux figures 4 à 6, où l'on a illustré l'arbre 26 d'articulation du levier 11 de la pédale 10 autour de l'axe 12 par rapport à la chaise 13, et plus précisément par rapport aux parois latérales ou joues 22, 23 de celle-ci, sous une forme comportant
- une partie radialement extérieure 43 de forme tubulaire, de révolution autour de l'axe 12, s'étendant suivant cet axe de l'une à l'autre des parois latérales ou joues 22, s'engageant solidairement par un tronçon extrême respectif 44, 45 dans le trou précité 24, 25 de ces parois latérales ou joues 22, 23 et comportant entre les tronçons extrêmes 44, 45 un tronçon intermédiaire 46 ainsi placé entre les parois latérales ou joues 22, 23, et
- une partie radialement intérieure 47 comportant deux bouchons 48, 49 dont chacun est localisé à l'intérieur de l'un, respectif, des tronçons extrêmes 44, 45 et dans une zone respective du tronçon intermédiaire 46 directement adjacente à ce tronçon extrême 44, 45, en épousant étroitement la périphérie intérieure de la partie radialement extérieure 33 de façon à renforcer celle-ci au niveau de la transition 50, 51 entre chaque tronçon extrême 44, 45 et le tronçon intermédiaire 46, les deux bouchons 48, 49 délimitant par ailleurs entre eux, à l'intérieur de la partie radialement extérieure 43, une cavité étanche 52 emplie d'une composition pyrotechnique 53 que des moyens d'inflammation non illustrés, commandés par le capteur de décélération 42 lorsque celui-ci détecte une décélération d'une valeur correspondant au dépassement du seuil F2 et émet un signal caractéristique de ce dépassement, de telle sorte que la composition pyrotechnique 53 soit alors enflammée et chasse ou détruise les bouchons 48, 49 de façon à dégager intérieurement la partie radialement extérieure 43 au moins au niveau de l'une des transitions 50, 51.

En vue d'assurer le montage du levier 11 et de la pédale 10 à la rotation autour de l'axe 12 par rapport à l'arbre 26, et plus particulièrement par rapport à cette partie radialement extérieure 43, le levier 11 est percé de part en part suivant l'axe 12, autour de la partie radialement extérieure 43 de l'arbre 26, d'un trou 54 par lequel est engagé coaxialement un manchon 55 solidarisé par exemple par soudure avec le levier 11. Ce manchon 55 entoure coaxialement la partie radialement extérieure 43 de l'arbre 26 en respectant vis-à-vis d'elle un jeu annulaire continu 56, et s'étend de l'une à l'autre des parois latérales ou joues 22, 23, entre ces dernières, en respectant également vis-à-vis de chacune d'elles un jeu annulaire continu 57, 58.

Chacun de ces jeux 57 et 58, et une partie respectivement adjacente du jeu 56, est comblé par une bague de glissement respective 59, 60 qui assure un appui du manchon 55 d'une part contre les parois 22 et 23 et d'autre part sur la partie radialement extérieure 43 de l'arbre 26, avec guidage à la rotation relative autour de l'axe 12 sans autre possibilité de mouvement, dans des zones du tronçon intermédiaire 46 directement adjacentes à l'une ou l'autre des transitions 50, 51, au niveau desquelles l'arbre 26, et notamment sa partie radialement extérieure 43, est sollicité au cisaillement entre la bague 57 ou 58 et la paroi latérale ou joue 22, 23, respectivement.

En relation avec la présente invention, au niveau de chacune des transitions 50 et 51 et en l'absence des bouchons 48, 49, la partie radialement extérieure 43 de l'arbre 26 est conçue pour résister aux contraintes de cisaillement, lorsque ces contraintes correspondent à une poussée F d'une valeur au plus égale à la valeur F1 précitée, et à se rompre si les contraintes de cisaillement deviennent supérieures. Cet effet calibré peut être obtenu pour une épaisseur radiale constante de la partie radialement extérieure 43 sur la totalité de ces tronçons extrêmes 44 et 45 et de son tronçon intermédiaire 46, comme on l'a illustré à la figure 4, grâce à un choix approprié de cette épaisseur compte tenu des caractéristiques mécaniques du matériau constituant la partie 43. Cependant, comme le montrent les figures 5 et 6, cet effet peut aussi être obtenu par une variation d'épaisseur radiale de la partie radialement extérieure 43 au niveau de l'une au moins des transitions 50, 51, à savoir sous forme d'un épaulement entre un tronçon intermédiaire 46 d'épaisseur moindre, calculé pour se rompre lorsque les contraintes de cisaillement atteignent une valeur correspondant à l'application d'une poussée de valeur F1 à la pédale 10, et un tronçon extrême 44, 45 d'épaisseur radiale supérieure, comme on l'a illustré en 61 à la figure 5, ou encore résulter de l'aménagement d'amorces de rupture par exemple sous forme d'une gorge annulaire de révolution autour de l'axe 12 dans une partie radialement extérieure 43 présentant par ailleurs une épaisseur constante sur la totalité de ces tronçons 44, 45, 46, comme on l'a illustré en 62 à la figure 6.

Les bouchons 48 et 49 sont quant à eux conçus de telle sorte que, lorsqu'ils sont présents, ils renforcent la partie radialement extérieure 43 au niveau de la transition 50, 51 respectivement correspondante de telle sorte qu'ensemble, la partie radialement extérieure 43 et les bouchons 48, 49 résistent à des contraintes de cisaillement supérieures à celles qui correspondent à l'application à la pédale 10 d'une poussée présentant la valeur F2 précitée.

Dans ces conditions, si on se réfère à présent à la figure 9, ce mode de mise en oeuvre de l'invention fonctionne de la façon suivante :
- si le capteur 42 vient à détecter une décélération dont la valeur est telle qu'elle risque d'entraîner entre la pédale 10 et le conducteur une poussée d'une valeur dépassant la valeur F2, c'est-à-dire à l'instant t₁, le capteur 42 émet un signal qui provoque l'allumage de la composition pyrotechnique 53 qui provoque elle-même un dégagement gazeux dont la pression, à l'instant t₂, atteint une valeur telle que l'un au moins des bouchons 48, 49, par exemple retenu par emboîtement à force à l'intérieur de la partie radialement extérieure 43, soit détruit ou chassé ;
- si, alors, la poussée appliquée par le pied du conducteur à la pédale 10 ou la réaction exercée par cette pédale dépasse la valeur F1, la partie radialement extérieure 43, à présent seule à transmettre les contraintes de cisaillement entre les bagues 57 et 58 et l'arbre 26 au niveau des transitions 50 et 51, se rompt au niveau de celle de ces transitions 50, 51 qui n'est plus renforcée par un bouchon 48, 49, ou au niveau de ces deux transitions si elles sont toutes deux dégagées du bouchon respectif 48, 49, et la pédale 10 est libérée vis-à-vis de la chaise 13 pour s'effacer vers l'avant à l'instant t₃ ;
- si, par contre, la poussée effectivement appliquée à la pédale 10 ou la réaction exercée par celle-ci sur le pied du conducteur ne dépasse pas la valeur F1, la partie radialement extérieure 43 reste suffisante pour transmettre les contraintes correspondantes même au niveau des transitions 50 et 51 et le conducteur peut utiliser la pédale de freinage 10 dans des conditions normales, c'est-à-dire dans des conditions telles que la poussée F qu'il exerce sur la pédale 10 se traduise par un pivotement du levier 11 autour de l'axe 12 par rapport à la chaise 13 et par un actionnement de l'amplificateur de freinage 14 par l'intermédiaire de la biellette 15, et ceci de façon répétée si nécessaire.

Un homme du métier comprendra aisément que la conception des bouchons 48 et 49 en vue d'autoriser leur dégagement ou leur destruction sous l'effet de la pression gazeuse dégagée par la combustion de la composition pyrotechnique 53 peut varier dans une large mesure, et n'est pas en elle-même caractéristique de la présente invention.

Un homme du métier comprendra également aisément que la structure qui vient d'être décrite à propos de l'arbre 26 d'articulation du levier 11 de la pédale 10 sur la chaise 13 pourrait être transposée à tout autre arbre d'articulation entre un composant rigide intervenant dans la transmission de mouvement entre la pédale 10 et l'amplificateur de freinage 14 ou tout autre organe commandé par application d'une poussée F sur la pédale 10. En particulier, au lieu d'être prévue au niveau de l'arbre 26, une telle structure pourrait être prévue au niveau d'un arbre 92 matérialisant l'axe 17 d'articulation entre le levier 11 et la biellette 15 ou d'un axe matérialisant l'articulation entre la biellette 15 et la tige de l'amplificateur 14, autour de l'axe 18, dans le cas du dispositif illustré à la figure 1, de même qu'au niveau de tout arbre d'articulation entre différentes tringles constituant un système de transmission plus complexe, connu en lui-même et non illustré, remplaçant la biellette 15 dans certaines configurations de dispositif de freinage. Dans un tel cas, on peut également prévoir d'aménager selon l'invention, de la façon décrite à propos de la chaise 13 en référence aux figures 1 à 3, toute chaise d'articulation de l'un quelconque des composants de la tringlerie ainsi constituée sur une contrepartie appartenant à la carrosserie du véhicule, voire tout levier intervenant dans cette transmission, ou encore aménager toute tringle de cette transmission, qu'elle travaille en traction ou en compression lors de l'application d'une poussée F à la pédale 10, d'une façon qui va être décrite à présent en relation avec la biellette 15, en référence aux figures 7 et 8.

La biellette 15 travaille en compression entre le levier 11 et la tige de l'amplificateur 14, selon une direction définie par son axe 16, perpendiculaire aux axes 17 et 18 d'articulation sur ce levier 11 et sur cette tige, lorsque l'on applique une poussée F à la pédale 10 mais les dispositions qui vont être décrites pourront être adaptées sans difficulté, par un homme du métier, au cas d'une tringle travaillant en traction lors de l'application d'une poussée F.

Comme la biellette correspondante d'un dispositif de freinage traditionnel, la biellette 15 présente deux extrémités 63, 64 formant chape d'articulation respectivement autour de l'axe 17 sur le levier 11 et autour de l'axe 18 sur la tige de l'amplificateur de freinage 14.

Par contre, à la différence des biellettes de l'art antérieur qu'elle remplace, lesquelles sont constituées d'une pièce entre leurs deux extrémités 63, 64 d'articulation sur les composants qu'elles relient, la biellette 15 comporte deux parties rectilignes d'axe 16, montées télescopiquement l'une par rapport à l'autre suivant cet axe, à savoir :
- une partie tubulaire 65 définissant l'une de ses extrémités, à savoir l'extrémité 63 dans l'exemple illustré, et présentant vers l'autre de ses extrémités, à savoir l'extrémité 64 dans cet exemple, une extrémité libre ouverte 66, et
- une partie formant tige 67 définissant l'autre extrémité de la biellette 15, à savoir son extrémité 64 dans l'exemple illustré, et comportant vers l'autre extrémité de la biellette 15, à savoir l'extrémité 63, une extrémité libre 68 engagée au coulissement suivant l'axe 16 à l'intérieur de l'extrémité ouverte 66 de la partie tubulaire 65, sans autre possibilité de déplacement relatif.

Si l'on excepte les extrémités 63, 64, les deux parties 65 et 67 présentent une forme générale de révolution autour de l'axe 16 et, notamment, sont définies respectivement par une face périphérique intérieure 69 cylindrique de révolution de cet axé et par une face périphérique extérieure 70 également cylindrique de révolution autour de cet axe mais avec un diamètre inférieur à celui de la face 69.

Le guidage à la translation relative sans autre possibilité de déplacement relatif est assuré par le fait qu'à son extrémité libre ouverte 66, la partie 65 présente un rebord 71 annulaire de révolution autour de l'axe 16 et formant une saillie vers celui-ci par rapport à la face périphérique intérieure 69 de la partie 65 de façon à présenter lui-même une face périphérique intérieure 72 de révolution autour de l'axe 16 avec un diamètre correspondant au diamètre de la face périphérique extérieure 70 de la partie formant tige 67, et par le fait qu'à son extrémité libre 68, cette partie de tige 67 présente un rebord 73 en saillie par rapport à la face 70, dans le sens d'un éloignement par rapport à l'axe 16, de façon à présenter une face périphérique extérieure 74 cylindrique de révolution autour de l'axe 16 avec un diamètre correspondant sensiblement à celui de la face périphérique intérieure 69 de la partie tubulaire 65. Ces faces 72 et 70, d'une part, 69 et 74, d'autre part, sont placées en contact mutuel glissant.

Dans des conditions normales de circulation du véhicule, c'est-à-dire tant que le capteur 42 n'a pas émis de signal témoignant de ce que le véhicule subit une décélération d'une valeur telle qu'il puisse s'ensuivre d'application, entre la pédale 10 et le pied du conducteur, d'une poussée ou d'une réaction dépassant la valeur F2, la biellette 15 se trouve dans l'état illustré des figures 7 et 8, dans lequel le rebord 13 est en butée contre le rebord 71, dans le sens d'un allongement apparent de la biellette 15 entre les axes 17 et 18, par l'intermédiaire d'un ressort hélicoïdal 75 d'axe 16, emprisonné dans une cavité 76 délimitée d'une part, suivant la direction de l'axe 16, par les rebords 71 et 74, et d'autre part, en direction radiale en référence à l'axe 16, par les faces 69 et 70. La présence d'un tel ressort 75 correspond à un mode d'exécution préféré de ce mode de mise en oeuvre de l'invention et, dans une variante simplifiée, ce ressort 75 pourrait être omis, auquel cas le rebord 73 buterait directement contre le rebord 71 dans le sens d'un allongement apparent de la biellette 15 lorsque celle-ci présente sa configuration de fonctionnement normal du véhicule.

On observera que, dans la mesure où la biellette 15 travaille à la compression entre le levier 11 et la tige de l'amplificateur 14 lorsqu'on actionne la pédale 10 par une poussée F, il n'est pas indispensable que les spires du ressort 75 soient en contact mutuel dans cet état de la biellette 15.

Pour maintenir la biellette 15 dans cet état, tant que le capteur 42 n'a pas émis le signal précité, la partie tubulaire 65 porte solidairement une goupille 78 qui la traverse de part en part suivant un axe 79 perpendiculaire à l'axe 16, dans une position telle que cette goupille 78 serve de butée à l'extrémité libre 68 de la partie formant tige 67, dans le sens d'un rapprochement vis-à-vis de l'extrémité 63, c'est-à-dire d'un raccourcissement apparent de la biellette 15 entre les axes 17 et 18 ou d'une extension élastique du ressort 75, qui est retenu en précontrainte de compression suivant l'axe 16 entre les rebords 71 et 73.

La goupille 78 est ainsi disposée dans une zone de la partie tubulaire 65 intermédiaire entre son extrémité ouverte 66 et son extrémité formant l'une des extrémités de la biellette 65, à savoir l'extrémité 63 de celle-ci dans l'exemple illustré.

Pour recevoir la goupille 78, la partie tubulaire 65 est percée suivant l'axe 79, en deux zones diamétralement opposées en référence à l'axe 16, de deux trous 80 et 81 que la goupille 78 traverse de part en part, à la façon dont l'arbre 26 traverse les parois latérales ou joues 22, 23 de la chaise 13, dans le cas du mode de mise en oeuvre de l'invention décrit en référence aux figures 4 à 6.

La goupille 78 présente elle-même une grande analogie avec l'arbre 26 en ce sens que, en référence à l'axe 79, elle comporte une partie radialement extérieure 82, de conformation générale tubulaire, et une partie radialement intérieure 83 susceptible d'être chassée pyrotechniquement de la partie radialement extérieure 62, par coulissement suivant l'axe 19 ou destruction, lorsque le capteur 42 détecte une décélération du véhicule susceptible d'entraîner entre la pédale 11 et le pied du conducteur une poussée ou une réaction de valeur dépassant F2.

Ainsi, comme la partie radialement extérieure 43 de l'arbre 26, la partie radialement extérieure 82 de la goupille 78 présente, en référence, l'axe 79, deux tronçons extrêmes 84, 85 engagés respectivement dans le trou 80 et dans le trou 81 et retenus dans le trou respectivement correspondant, de façon solidaire, par un moyen approprié tel qu'un emmanchement à force ou, comme on l'a illustré, une soudure de la partie radialement extérieure 82 de la goupille 78 sur la partie tubulaire 65, à l'extérieur de celle-ci, du côté du trou 80. Entre les tronçons extrêmes 84 et 85 suivant l'axe 79, la goupille 78 présente un tronçon intermédiaire 86 traversant de part en part la partie tubulaire 65 suivant l'axe 79 et servant d'appui à l'extrémité libre 68 de la partie formant tige 67 à l'encontre d'un mouvement du rebord 73 dans le sens d'un éloignement par rapport au rebord 71, alors que les tronçons extrêmes 84, 85 s'appuient dans ce sens sur la partie tubulaire 65, à l'intérieur des trous 80 et 81 de celle-ci. La transition 87, 88 entre le tronçon intermédiaire 86 et respectivement chacun des tronçons extrêmes 84, 85 travaille dans ce cas au cisaillement mais, considérée isolément, la partie radialement extérieure 82 de la goupille 78 présente une résistance mécanique au niveau des transitions 87 et 88 juste suffisante pour résister à des contraintes correspondant à l'application à la pédale 10, par le pied du conducteur, d'une poussée F de valeur F1, c'est-à-dire insuffisante pour résister à des contraintes de cisaillement d'une valeur dépassant celle qui correspond à l'application de la poussée F de valeur F1. A cet égard, l'une ou l'autre des dispositions décrites en référence aux figures 4 à 6, pour calibrer l'effort de cisaillement auquel peut résister la partie radialement extérieure 43 de l'arbre 26, peut être adoptée au niveau des transitions 87 et 88 de la partie radialement extérieure 82 de la goupille 78.

Contrairement à la partie radialement extérieure 43 de l'arbre 26 telle qu'elle a été décrite en référence aux figures 4 à 6, la partie radialement extérieure 82 de la goupille 78 n'est pas en elle-même ouverte dans les deux sens de son axe 79, mais elle est fermée de façon étanche, dans une zone extrême située à l'extérieur de la partie tubulaire 65 et par exemple du côté du trou 80, par une paroi 89 perpendiculaire à l'axe 79. On observe que cette paroi 89 est décalée, suivant l'axe 19, par rapport à la transition 87 la plus proche.

Par contre, du côté du trou 81, la partie radialement extérieure 82 présente une extrémité ouverte suivant l'axe 79, à l'extérieur de la partie tubulaire 65, et reçoit de façon solidaire, par exemple par emmanchement à force, la partie radialement intérieure 83 qui présente la forme générale d'un bouchon et épouse intérieurement la partie radialement extérieure 82 dans le sens d'un éloignement par rapport à l'axe 79, au niveau du tronçon extrême 85, de la partie du tronçon intermédiaire 86 immédiatement adjacente à ce tronçon extrême 85, et par conséquent au niveau de la transition 88.

Le bouchon 83 délimite avec la paroi 89 de la partie radialement extérieure 82 ainsi qu'avec le tronçon 84 de celle-ci et la partie du tronçon intermédiaire 86 qui est directement adjacente une cavité étanche 90 emplie d'une composition pyrotechnique 91 susceptible d'être enflammée, lorsque le capteur 42 émet un signal témoignant d'une décélération risquant d'entraîner l'application d'une poussée dépassant la valeur F2 entre la pédale 10 et le pied du conducteur, par un inflammateur pyrotechnique logé à l'intérieur du bouchon 83 de telle sorte qu'alors, le développement gazeux résultant de la combustion de la composition pyrotechnique 91 chasse la partie radialement intérieur 83 de la goupille 78 suivant l'axe 79, c'est-à-dire laisse la partie radialement extérieure 82 résister seule aux contraintes de cisaillement pouvant s'exercer non seulement au niveau de la transition 87 mais également au niveau de la transition 88, c'est-à-dire se rompre au niveau de ces deux transitions si les contraintes en question dépassent un seuil correspondant à une valeur de la poussée F au moins égale à F1. Par contre, en présence du bouchon 83, la goupille 78 constituée en combinaison de ce bouchon 83 et la partie radialement éxtérieure 82 est apte à résister, au niveau des transitions 87 et 88, à des contraintes de cisaillement correspondant à des valeurs de poussée F dépassant la valeur F2.

Dans ces conditions, le fonctionnement de ce mode de mise en oeuvre de la présente invention est le suivant :
- dans des conditions normales de circulation du véhicule, la biellette 15 occupe sa condition illustrée aux figures 7 et 8, c'est-à-dire peut transmettre suivant son axe 16, de l'un à l'autre des axes 17, 18, des poussées correspondant à des contraintes de cisaillement au niveau des transitions 87 et 88 dépassant un seuil correspondant à l'application à la pédale 10 d'une poussée F d'une valeur dépassant F2 ;
- si le capteur 42 émet un signal témoignant de ce que la poussée exercée entre le pied du conducteur et la pédale 10 risque d'excéder F2, la composition pyrotechnique 91 est enflammée à l'instant t₁ si bien que, compte tenu du temps nécessaire à la composition pyrotechnique pour développer une pression gazeuse supérieure à celle qui est nécessaire pour vaincre la résistance du bouchon 83 à l'expulsion ou à l'éclatement, le bouchon 83 est expulsé ou éclaté à l'instant t₂ en laissant la partie radialement extérieure 82 de la goupille 78 seule à résister aux contraintes de cisaillement au niveau des transitions 87 et 88 ;
- si, alors, la poussée F effectivement appliquée par le conducteur à la pédale 10, conjuguée à l'effet du ressort 75, considéré comme négligeable à cet égard, est inférieure à la valeur F1, la partie radialement extérieure 82 de la goupille 78 reste intacte et le dispositif de freinage peut continuer à fonctionner dans les conditions normales, toute poussée F de valeur inférieure à F1, appliquée à la pédale 10, se traduisant par un actionnement de l'amplificateur de freinage 14 par l'intermédiaire de la biellette 15 ;
- si, par contre, la poussée F dépasse la valeur F1, la conjugaison de l'effort de poussée qui en résulte suivant l'axe 16 dans la biellette 15, conjugué à l'effet à cet égard négligeable du ressort 75, provoque la rupture de la partie radialement extérieure 82 de la goupille 78 au niveau des deux transitions 87 et 88, ce qui libère la partie formant tige 67 vis-à-vis d'un coulissement à l'intérieur de la partie extérieure tubulaire 65 dans le sens d'un raccourcissement apparent de la biellette 15, et le ressort 75 provoque alors de façon coercitive un tel raccourcissement apparent en éloignant mutuellement les deux rebords 71 et 73, si bien que la pédale 10 s'efface vers l'avant et vers le bas, de façon coercitive, même si aucune poussée ne lui est appliquée par le pied de l'utilisateur. Dans la variante évoquée ci-dessus, suivant laquelle le ressort 75 serait absent, ce serait par contre une poussée appliquée par le pied à la pédale 17 qui provoquerait l'escamotage de cette dernière.

On observera que, dans le cas du mode de mise en oeuvre de l'invention qui a été décrit en référence aux figures 7 et 8, on peut préserver une certaine possibilité de freinage après escamotage de la pédale 10 dans la mesure où l'extrémité libre 78 de la partie formant tige 67 peut venir buter, par un dimensionnement approprié des deux parties 65 et 67 suivant l'axe 16, contre le levier 11 dans un état de raccourcissement apparent maximal de la biellette 15, correspondant à une course maximale 93 des deux parties 65 et 67 l'une par rapport à l'autre dans le sens de ce raccourcissement apparent et à l'escamotage maximal de la pédale 10 vers l'avant et vers le bas.

Dans les différents modes de mise en oeuvre de l'invention viennent d'être décrits en référence aux figures 1 à 8, l'escamotage de la pédale est brutal si, après affaiblissement pyrotechnique de la liaison entre la chaise 13 et la bride 19, de l'arbre 26 ou de la goupille 78, respectivement, le conducteur vient à appliquer à la pédale de freinage une poussée de valeur supérieure à F1.

Il peut s'ensuivre pour le conducteur une sensation désagréable, voire un affolement, que l'on peut éviter en prévoyant des moyens pour freiner cet escamotage.

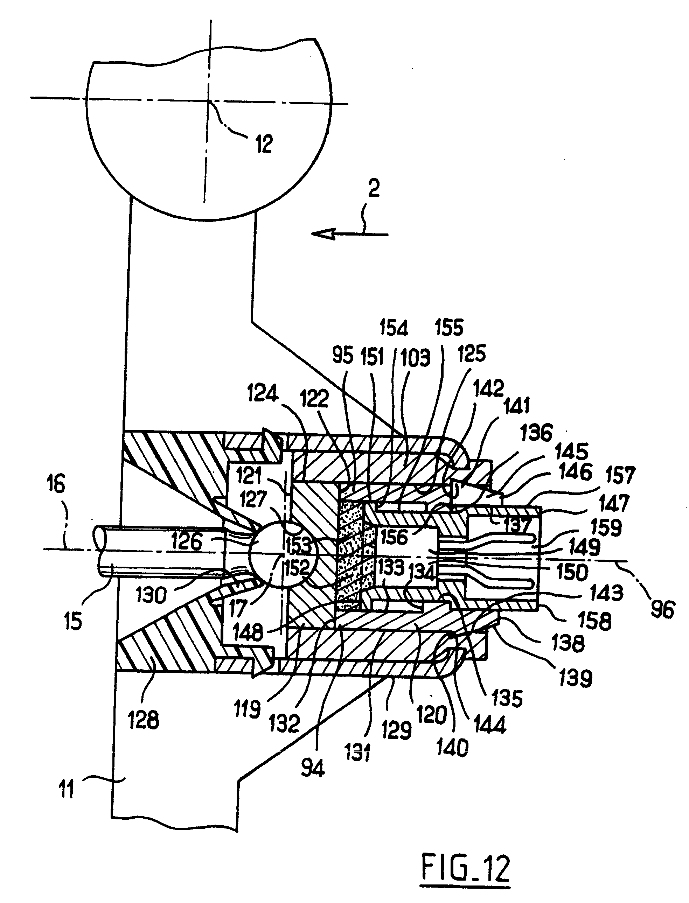

Trois exemples de réalisation d'un dispositif selon l'invention comportant de tels moyens ont été illustrés respectivement à la figure 9, aux figures 10 et 11 et à la figure 12, dans le cas d'un affaiblissement pyrotechnique au niveau de l'articulation de la biellette 15 sur le levier 11 portant la pédale 10, étant bien entendu que de tels moyens de freinage de l'escamotage de la pédale pourraient être prévus, sous une forme aisément adaptable par un homme du métier à partir des formes qui vont être décrites, dans le cas d'une localisation différente de l'affaiblissement pyrotechnique, et notamment dans le cas des différentes localisations décrites en référence aux figures 1 à 8.

On se référera en premier lieu à la figure 9, où l'on voit que l'articulation de la biellette 15 autour de l'axe 17 sur le levier 11 ne s'effectue pas directement, comme on l'a décrit en référence aux figures 1 à 8, mais par l'intermédiaire d'un bloc de butée 94 monté au coulissement à l'intérieur d'un logement 95 aménagé dans le levier 11 suivant un axe 96 qui coupe perpendiculairement l'axe 17 et coïncide au moins approximativement avec une position moyenne de l'axe 16. La biellette 15 peut être par exemple articulée sur le bloc 14 au moyen d'une chape, connue en elle-même et non illustrée.

Dans des conditions normales de circulation de véhicule, c'est-à-dire tant que celui-ci ne subit pas une décélération propre à entraîner entre la pédale 10 et le pied du conducteur une poussée d'une valeur dépassant F2, le bloc de butée 94 est retenu à l'encontre d'un coulissement suivant l'axe 96 à l'intérieur du logement 95 par deux tourillons 98, 99 disposés suivant un même axe 100 perpendiculaire à l'axe 96 et dont chacun est engagé sans jeu dans un trou correspondant 101, 102 d'une paroi tubulaire 103 solidaire du levier 11 et délimitant le logement 95 dans le sens d'un éloignement par rapport à l'axe 96, autour duquel la paroi 103 présente par exemple une forme tubulaire de révolution.

Le bloc 94 est creux, de façon à délimiter intérieurement une cavité étanche 104 s'étendant jusqu'à l'intérieur des tourillons 98 et 99, qui présentent de préférence une amorce de rupture non référencée, par exemple réalisée comme on l'a décrit en référence à la figure 6, à leur raccordement avec le bloc 94.

A l'intérieur de la cavité 104 est logée une composition pyrotechnique 105 qui peut être enflammée au moyen d'un inflammateur 106 commandé électriquement par le capteur 42, lorsque celui-ci émet un signal caractéristique d'une décélération pouvant entraîner l'application d'une poussée dépassant F2 entre la pédale 10 et le pied du conducteur. Lorsque tel est le cas, l'inflammation de la composition pyrotechnique 105 à l'intérieur de la cavité 104 provoque un dégagement de gaz sous pression à l'intérieur de celle-ci, lequel provoque la rupture des tourillons 98, 99 à leur raccordement avec le bloc 94 et l'expulsion de ces tourillons 98, 99, ce qui libère le bloc 94 vis-à-vis d'un coulissement suivant l'axe 96 à l'intérieur du logement 95, notamment vers l'arrière en référence au sens 2, si bien que l'application d'une poussée F à la pédale 10 peut certes se traduire par un pivotement de la pédale 11 autour de l'axe 12 dans le sens de l'application d'une poussée à la biellette 15, mais que cette poussée n'est pas effectivement transmise à la biellette 15 dans la mesure où le bloc 94 recule dans son logement 95.

Le dispositif illustré à la figure 9 pourrait fonctionner à l'identique des dispositifs de l'Art antérieur si le logement 95 présentait une section constante, perpendiculairement à l'axe 96.

Toutefois, afin d'assurer un effet de freinage de l'escamotage de la pédale 10 après rupture pyrotechnique des tourillons 98, 99, le logement 95 présente perpendiculairement à l'axe 96 une section qui décroît progressivement vers l'arrière en référence au sens 2, d'une façon prédéterminée de telle sorte que le recul du bloc 94 soit freiné par friction et/ou déformation plastique ou élastique de ce bloc 94 et/ou de la paroi 103 au niveau du rétrécissement 107. Ainsi, tant que le bloc 94 reste engagé dans le logement 95 au niveau du rétrécissement 107 de celui-ci, le conducteur peut, en appliquant une poussée F à la pédale 10, continuer à actionner le frein par transmission de cette poussée à la tige de l'amplificateur de freinage 14 par l'intermédiaire du bloc de butée 94 et de la biellette 15, ce qui suppose que la poussée qu'il applique ainsi ne dépasse pas un seuil propre à provoquer une traversée complète du rétrécissement 107 vers l'arrière, suivant l'axe 96, dans le bloc de butée 94. En effet, vers l'arrière, le rétrécissement 107 aboutit à une extrémité arrière ouverte 108 du logement 95, si bien que l'application d'une poussée F dépassant le seuil prédéterminé F1 à la pédale 10 provoque une traversée complète du rétrécissement 107 par le bloc 94, vers l'arrière, et le dégagement total de ce dernier vis-à-vis du logement 95, c'est-à-dire une impossibilité de transmettre à la biellette 15 les poussées appliquées du pied à la pédale 10.

Les figures 10 et 11 illustrent un autre mode de réalisation d'un dispositif selon l'invention offrant une telle possibilité.

On retrouve dans ce cas le bloc 94, monté au coulissement suivant l'axe 96 dans un logement 95 défini par une paroi tubulaire 103, par exemple de révolution autour de l'axe 96, portée solidairement par le levier 11 de la pédale 10, mais ce logement 103 présente perpendiculairement à l'axe 96 une section constante, le bloc 94 n'est pas creux et ne contient pas de composition pyrotechnique et les deux tourillons 98, 99 d'axe 100 qui relient ce bloc 94 à la paroi 103 ne sont pas susceptibles de rupture pyrotechnique.

En outre, les deux trous 101, 102 qui reçoivent sans jeu respectivement l'un et l'autre de ces tourillons 98 et 99 ne sont pas aménagés directement dans la paroi 103, mais dans deux languettes élastiquement flexibles 109, 110 dont chacune est solidarisée avec la paroi 103 en avant du trou respectif 101, 102, par exemple par rivetage, et qui sont par ailleurs libres de façon à pouvoir fléchir, dans une zone arrière en référence au sens 2, de façon propre à s'écarter élastiquement, voire plastiquement, de la paroi 103 afin de dégager les tourillons 98, 99 des trous 101, 102.

A cet effet, dans une zone arrière des languettes 109, 110, entre celles-ci est interposé un ensemble cylindre-piston 111 disposé suivant un axe 112 perpendiculaire à l'axe 96 et parallèle à l'axe 100, cet axe 112 étant fixe par rapport à la paroi 103 par exemple par montage de l'ensemble cylindre-piston 11 au coulissement, sans autre possibilité de déplacement, suivant l'axe 112, dans des guides non représentés solidaires de la paroi 103. L'ensemble cylindre-piston 111 est creux de façon à délimiter intérieurement une cavité étanche 114 qui est emplie d'une composition pyrotechnique 115 que des moyens d'inflammation 116, portés solidairement par l'un des composants de l'ensemble cylindre-piston 111 et commandés par le signal émis par le capteur 42, permettent d'enflammer de façon à provoquer à l'intérieur de la cavité 114 un dégagement gazeux dont la pression provoque une expansion de l'ensemble cylindre-piston suivant l'axe 112, et par conséquent un écartement des extrémités arrière des deux languettes 109, 110 vis-à-vis de la paroi 103 dans des conditions propres à libérer les tourillons 98 et 99. Avantageusement, l'ensemble cylindre-piston 111 est dimensionné suivant l'axe 112 de telle sorte qu'avant inflammation de la composition pyrotechnique 115, il prenne appui respectivement contre l'une et l'autre des languettes 109, 110.

Pour s'engager dans les trous 101, 102, les tourillons 98, 99 traversent des lumières 117, 118, aménagées dans la paroi 103 dans des positions diamétralement opposées par rapport à l'axe 96, suivant un même plan moyen 119 qui est défini par les axes 96 et 100.

Les deux lumières 117, 118 étant mutuellement symétriques par rapport à l'axe 96 et chacune d'entre elles étant symétrique par rapport au plan 119, on décrira seulement la lumière 117 associée au tourillon 98 et au trou 101, en se référant à la figure 11.

Comme il ressort de cette figure, la lumière 117 présente une zone d'extrémité antérieure 120 disposée autour de l'axe 100 de façon à recevoir le tourillon 98 correspondant, qui traverse de part en part la paroi 103 par cette zone 120 pour s'insérer dans le trou 101 ; de même, c'est à travers la lumière 118 de la paroi 103 que le tourillon 99 s'engage dans le trou 102 de la languette 110.

Au niveau de cette extrémité 120, la lumière 117 présente perpendiculairement à l'axe 100 une section complémentaire de celle du tourillon 98.

En arrière de cette zone d'extrémité 120, la lumière 117 se poursuit pour déboucher en avant de l'ensemble cylindre-piston 111, par une extrémité arrière ouverte 121 par laquelle le tourillon 98, en coulissant vers l'arrière à l'intérieur de cette lumière 117, peut s'échapper en libérant ainsi le bloc 94 vis-à-vis de la paroi 103 de façon propre à empêcher la transmission à la biellette 15 de la poussée F alors appliquée à la pédale 10 par le conducteur, le tourillon 99 échappant de la même façon à la lumière 118, dès lors que les languettes 109, 110 ont été suffisamment écartées par leurs extrémités arrière pour que les tourillons 98, 99 soient dégagés des trous 101, 102.

La lumière 117, comme la lumière 118, pourrait présenter perpendiculairement au plan 119 une dimension constante de l'extrémité avant telle que 120 à l'extrémité arrière telle que 121, si bien que ces lumières 117, 118 n'opposeraient aucune résistance au coulissement du bloc 94 vers l'arrière à l'intérieur du logement 95, et que ce mode de réalisation d'un dispositif selon l'invention fonctionnerait comme on l'a décrit en référence à l'Art antérieur.

Toutefois, afin d'assurer un effet de freinage de la pédale lors de son escamotage, la lumière 117, ainsi que la lumière 118, présentent perpendiculairement au plan 119 une dimension qui décroît progressivement vers l'arrière, dans des conditions telles que le coulissement des tourillons 98, 99 dans les lumières 117, 118 implique une friction et/ou une déformation élastique ou plastique des tourillons 98, 99 et/ou de la paroi 103 autour des lumières 117, 118, du moins jusqu'à ce que l'application éventuelle d'une poussée F dépassant le seuil F1 provoque l'échappement des tourillons 98, 99 vers l'arrière par rapport aux lumières 117, 118.

On se référera à présent à la figure 12, où l'on retrouve le bloc de butée 94, monté au coulissement suivant l'axe 96 dans un logement 95 défini par une paroi tubulaire 103, par exemple de révolution autour de l'axe 96, portée solidairement par le levier 11 entre son extrémité supérieure d'articulation autour de l'axe 12 sur la chaise 13, non illustrée, et son extrémité inférieure portant la pédale 10, également non illustrée.

La paroi tubulaire 103 est sensiblement indéformable dans des conditions normales d'utilisation du dispositif, comme dans le cas des modes de réalisations décrits respectivement en référence à la figure 9 et aux figures 10 et 11, mais au lieu d'être également sensiblement indéformable dans de telles conditions comme c'est le cas dans l'un l'autre de ces modes de réalisation, le bloc de butée 94 est ici constitué de deux pièces 119 et 120 dont la première est sensiblement indéformable dans des conditions normales d'utilisation et dont la deuxième, bien que pour l'essentiel également sensiblement indéformable dans de telles conditions, est localement flexible, élastiquement ou plastiquement, comme il apparaîtra plus loin. Ces deux pièces 119 et 120 sont mutuellement juxtaposées suivant l'axe 96 et constituent respectivement une pièce avant et une pièce arrière en référence au sens 2.

La pièce avant 119, contre laquelle la biellette 15 s'appuie vers l'arrière en référence au sens 2 en s'articulant par rapport à elle autour de l'axe 17, présente la forme d'une plaquette perpendiculaire à l'axe 96 et guidée au coulissement suivant celui-ci par rapport à la paroi tubulaire 103.

A cet effet, la pièce 119 est délimitée, dans le sens d'un éloignement par rapport à l'axe 96, par une face périphérique extérieure 124 cylindrique de révolution autour de cet axe avec un diamètre sensiblement identique à celui d'une face périphérique intérieure 125, également cylindrique de révolution autour de l'axe 96 que la paroi tubulaire 103 présente vers cet axe 96 pour délimiter le logement 95. La pièce 119 peut ainsi occuper, par rapport à la paroi tubulaire 103, une position limite avant, en référence au sens 2, dans laquelle elle est illustrée à la figure 12, mais elle peut coulisser vers l'arrière, en référence au sens 2, par rapport à la paroi tubulaire 103 jusqu'à s'échapper de cette dernière vers l'arrière, de façon non illustrée. La position limite avant de la pièce 119 constitue la position que celle-ci occupe dans des conditions normales de fonctionnement du véhicule , c'est-à-dire tant que le capteur 42, non représenté sur cette figure, n'a pas détecté une décélération du véhicule propre à entraîner un risque que la poussée F appliquée par le pied du conducteur la pédale 10, également non illustrée, ou la réaction que ce pied reçoit de la pédale 10 dépasse le seuil F2, par exemple de 200 daN.

Par ailleurs, respectivement vers l'avant et vers l'arrière en référence au sens 2, la pièce ou plaquette 119 est délimitée par deux faces frontales 121, 122, généralement planes, perpendiculaires à l'axe 96, dont la première est creusée suivant celui-ci d'un logement d'appui pour la biellette 15 vers l'arrière sur la pièce 119, en référence au sens 2, avec articulation mutuelle autour de l'axe 17.

Plus précisément, dans cet exemple, l'articulation de la biellette 15 est une articulation à rotule autour d'un centre défini comme l'intersection de l'axe 16, de l'axe 17 et de l'axe 96. A cet effet, la biellette 15 présente à son extrémité arrière, en référence au sens 2, une tête de rotule 126, sphérique autour d'un centre auquel on conservera la référence numérique 17, et la face frontale avant 121 comporte pour recevoir cette tête 126 un logement 127 présentant la forme d'une calotte sphérique de même centre 17 et de même diamètre, mais correspondant à moins d'un hémisphère. Pour assurer la retenue de la tête de rotule 126 dans le logement 127 lorsque la pièce ou plaquette 119 occupe sa position limite avant, illustrée, une pièce anti-retour 128 de réalisation connue, solidarisée avec la paroi tubulaire 103 par exemple par encliquetage élastique dans une paroi tubulaire 129, d'axe 96, assurant la solidarisation de la paroi tubulaire 103 avec le levier 11, prend appui vers l'arrière sur la tête 126, en avant de celle-ci en référence au sens 2, par l'intermédiaire de languettes élastiquement flexibles 130 équiréparties autour de l'axe 96 et convergeant mutuellement vers l'arrière en référence au sens 2.

La face arrière 122 de la pièce ou plaquette 119 est quant à elle placée en appui vers l'arrière sur la pièce 120, laquelle présente la forme générale d'un manchon tubulaire de révolution autour de l'axe 96.

Plus précisément, la pièce arrière 120 est délimitée, dans le sens d'un éloignement par rapport à l'axe 96, par une face périphérique extérieure 131 cylindrique de révolution autour de cet axe avec un diamètre sensiblement identique à celui de la face périphérique intérieure 125 de la paroi tubulaire 103, de façon à assurer un guidage de la pièce arrière 120 au coulissement relatif suivant l'axe 96 vers l'arrière en référence au sens 2, à partir d'une position limite avant illustré à la figure 12. Vers l'avant en référence 2, cette face périphérique extérieure 131 se raccorde à une face frontale avant 132, plane, annulaire de révolution autour de l'axe 96 auquel elle est perpendiculaire, laquelle face 132 s'appuie à plat contre la face 122 de la pièce 119 notamment dans les positions limites avant respectives des pièces 119 et 120 .

La face 132 raccorde elle-même la face périphérique extérieure 131, dans le sens d'un rapprochement vis-à-vis de l'axe 96, à une face périphérique intérieure 133 également cylindrique de révolution autour de l'axe 96, mais avec un diamètre inférieur à celui de la face périphérique extérieure 131.

Vers l'arrière en référence au sens 2, la face 133 relie la face 132 à un épaulement 134 plan, annulaire de révolution autour de l'axe 96 auquel il est perpendiculaire, cet épaulement 134 étant tourné vers l'avant en référence au sens 2 et raccordant la face périphérique intérieure 133, dans le sens d'un rapprochement vis-à-vis de l'axe 96, à une face périphérique intérieure 135 également cylindrique de révolution autour de l'axe 96, mais avec un diamètre inférieur à celui de la face 133. Cette face 135 relie l'épaulement 134, vers l'avant, à un épaulement 136 similaire à l'épaulement 134 mais quant à lui tourné vers l'arrière en référence au sens 2, lequel épaulement 136 relie la face périphérique intérieure 135, dans le sens d'un éloignement par rapport à l'axe 96, à une face périphérique intérieure 137 également cylindrique de révolution autour de l'axe 96 mais avec un diamètre intermédiaire entre les diamètres respectifs des faces périphériques intérieures 133 et 135.

Vers l'arrière en référence au sens 2, la face périphérique intérieure 137 relie l'épaulement 136 à une face frontale 138 plane, annulaire de révolution autour de l'axe 96 auquel elle est perpendiculaire.

Cette face 138, tournée vers l'arrière en référence au sens 2, délimite la pièce 120 vers l'arrière et peut, comme il est illustré, être placée légèrement en saillie selon l'axe 96, vers l'arrière, par rapport à la paroi tubulaire 103 dans la position limite avant de la pièce 120.

Dans le sens d'un éloignement par rapport à l'axe 96, la face 138 raccorde la face périphérique intérieure 137 à une face périphérique extérieure 139 tronconique de révolution autour de l'axe 96 avec une divergence toumée vers l'avant en référence au sens 2, depuis un diamètre minimal, intermédiaire entre les diamètres respectifs de la face périphérique 133 et de la face périphérique extérieure 131, que cette face tronconique 139 présente à son raccordememnt avec la face 138, jusqu'à un diamètre maximal supérieur à celui de la face périphérique extérieure 131, que la face tronconique 139 présente dans une zone d'extrémité avant en référence au sens 2, zone par laquelle elle se raccorde à la face périphérique intérieure131 par un épaulement 140 plan, annulaire de révolution autour de l'axe 96 auquel il est perpendiculaire, et tourné vers l'avant.

En référence au sens 2, l'épaulement 140 est situé au même niveau que l'épaulement 136, et ce niveau est intermédiaire entre les niveaux respectifs des zones extrêmes avant et arrière de la face périphérique intérieure 125 de la paroi tubulaire 103 dans la position limite avant de la pièce 120 par rapport à la paroi tubulaire 103.

Dans cette position limite avant, une partie de la face 139 directement adjacente à l'épaulement 140 et cet épaulement 140, placés en saillie par rapport à la face périphérique extérieure 131 de la pièce 120 dans le sens d'un éloignement par rapport à l'axe 96, forment également une saillie dans ce sens par rapport à la face périphérique intérieure 125 de la paroi tubulaire 103 et, pour recevoir cette saillie localisée 141, la face périphérique intérieure 125 est creusée localement d'une gorge142 annulaire de révolution autour de l'axe 96 et présentant, lorsqu'elle est vue en coupe par un quelconque plan incluant cet axe, une section complémentaire de celle de la saillie 141. En d'autres termes, la gorge 142 est délimitée, dans une zone de la face périphérique intérieure 125 de la paroi 103 intermédiaire entre les zones extrêmes avant et arrière de celle-ci mais plus proche de sa zone extrême arrière, par deux flancs 143, 144, dont le premier est tronconique de révolution de l'axe 96 avec une conicité identique à celle de la face tronconique 139 de la pièce 120 mais en étant tourné vers l'axe 96 et dont le second est plan, annulaire de révolution autour de l'axe 96 auquel il est perpendiculaire, et tourné vers l'arrière de telle sorte que la saillie 141 s'emboîte précisément dans la gorge 142 et que cet emboîtement assure une immobilisation de la pièce 120, et, avec elle, de la pièce 119 dans leur position limite avant à l'encontre d'un coulissement vers l'arrière, en référence au sens 2, par rapport à la paroi tubulaire 103, du moins tant que le capteur 42 n'a pas été actionné.

Toutefois, comme le montre la partie supérieure de la figure 12, la pièce 120 présente, suivant une pluralité de demi-plans définis par l'axe 96 et équirépartis régulièrement autour de celui-ci, des fentes 145 qui traversent de part en part, perpendiculièrement à l'axe 96 , une zone extrême arrière de cette pièce 120, en référence au sens 2, laquelle zone extrême arrière est délimitée par les faces 137, 138, 139 et par le niveau commun des épaulements 136 et 140. Ainsi, la pièce 120 présente dans cette zone d'extrémité arrière la forme d'une pluralité de pattes 146 mutuellement disjointes suivant une direction circonférentielle en référence à l'axe 96, équi réparties angulairement autour de celui-ci et dont chacune peut fléchir vers celui-ci, moyennant une flexion élastique de la pièce 120 lorsque celle-ci est élastiquement flexible ou une déformation plastique de cette pièce, jusqu'à ce que la saillie 141 ne présente plus , à la liaison entre la face tronconique 139 et l'épaulement 140, qu'un diamètre au plus égal au diamètre de la face périphérique intérieure 125 de la paroi tubulaire 103 et que la pièce 120, et avec elle la pièce 119, puissent s'échapper par coulissement vers l'arrière, en référence au sens 2, par rapport à la paroi tubulaire 103.

Le matériau constitutif de la pièce 120 et ses dimensions, notamment au niveau commun des épaulements 136 et 140, qui correspond à une zone de fléchissement privilégié des pattes 146, sont choisis de telle sorte qu'à ce fléchissement s'oppose une certaine résistance qui, comme il apparaîtra par la suite, se traduit par une certaine résistance à l'encontre d'un mouvement conjoint de coulissement des pièces 119 et 120 vers l'arrière en référence au sens 2 par rapport à la paroi tubulaire 103 par friction de la face tronconique 139 contre le flanc tronconique 143 le la gorge 142 puis, si le fléchissement des pattes 146 est élastique, par friction de la jonction entre la face tronconique 139 et l'épaulement 140 sur la zone de la face périphérique intérieure 125 de la paroi 103 subsistant en arrière de la gorge 142 en référence au sens 2

Tant que le capteur 42 n'a pas été actionné, toutefois, les pattes 146 sont retenues dans la position illustrée, dans laquelle la saillie 141 est emboîtée dans la gorge 142, par un piston 147 qui est logé coaxialement à l'intérieur de la pièce 120 et va être décrit à présent, en référence à la position qui est illustrée à la figure 12 et qui est une position limite avant, en référence au sens 2, que le piston 147 occupe par rapport à la pièce 120 tant que le capteur 42 non illustré n'a pas été actionné ; lorsque le capteur 42 est actionné, comme il apparaîtra plus clairement par la suite, le piston 47 coulisse coaxialement vers l'arrière, en référence au sens 2, à l'intérieur de la pièce 120 pour gagner une position limite arrière, en référence au sens 2, par rapport à cette pièce 120 .

Vers l'avant en référence au sens 2, le piston 147 est délimité par une face plane 148, annulaire de révolution autour de l'axé 96 auquel elle est perpendiculaire, cette face étant placée directement en regard de la face 122 de la pièce 119 mais écartée de cette dernière vers l'arrière, en référence au sens 2, tout en en étant plus proche que de l'épaulement 134.

Respectivement dans le sens d'un rapprochement vis-à-vis de l'axe 96 et dans le sens d'un éloignement par rapport à celui-ci, cette face 148 se raccorde à un logement 149 aménagé à l'intérieur du piston 147 et recevant, en l'immobilisant par rapport à ce piston 147, un inflammateur 150 commandé électriquement par le capteur 42 non représenté, et à une face périphérique extérieure 151 cylindrique de révolution autour de l'axe 96 avec un diamètre correspondant sensiblement à celui de la face périphérique intérieure 133 de la pièce 120, de telle sorte que s'établisse entre ces faces 151 et 133, tournées respectivement dans le sens d'un éloignement par rapport à l'axe 96 et dans le sens d'un rapprochement par rapport à celui-ci, un contact de guidage au coulissement relatif suivant l'axe 96.

Ainsi, la face 148 du piston 147, l'inflammateur électrique 150 immobilisé dans le logement 149, fermé de façon étanche dans le sens d'un éloignement par rapport à l'axe 96 et vers l'arrière en référence au sens 2 mais ouvert vers l'avant en référence à ce sens, la partie de la face 133 située entre la face 148 et la face 122 et la partie de cette face 122 située en retrait vers l'axe 96 par rapport à la face 133 délimitent ensemble une cavité étanche 152 logeant une composition pyrotechnique 153 susceptible de dégager un gaz sous pression à l'intérieur de la cavité 152 lorsqu'elle a été enflammée par l'inflammateur 150.

Vers l'arrière en référence au sens 2, la face périphérique extérieure 151 relie la face 148 à un épaulement 154 plan, annulaire de révolution autour de l'axe 96 auquel il est perpendiculaire, cet épaulement 154 étant tourné vers l'arrière en référence au sens 2 et placé en regard de l'épaulement 134, dont il est cependant espacé d'une distance qui, mesurée parallèlement à l'axe 96, est au moins égale à la distance séparant mutuellement l'épaulement 136 et la face 138 de la pièce 120.

Dans le sens d'un rapprochement vis-à-vis de l'axe 96, l'épaulement 154 relie la face périphérique extérieure 151 à une face périphérique extérieure 155 également cylindrique de révolution autour de l'axe 96 mais avec un diamètre sensiblement égal à celui de la face périphérique intérieure 135 de la pièce 120 de telle sorte que s'établisse entre les faces 155 et 135 un contact de guidage au coulissement relatif parallèlement à l'axe 96.

Vers l'arrière en référence au sens 2, la face 155 raccorde l'épaulement 154 à un épaulement 156 plan, annulaire de révolution autour de l'axe 96 et perpendiculaire à celui-ci, et quant à lui tourné vers l'avant en référence au sens 2 et en contact, vers l'avant, avec l'épaulement 136 de la pièce 120.

Dans le sens d'un éloignement par rapport à l'axe 96, cet épaulement 156 raccorde la face périphérique extérieure 155 à une face périphérique extérieure 157 cylindrique de révolution autour de l'axe 96 et présentant un diamètre sensiblement identique à celui de la face périphérique intérieure 137 de la pièce 120, de telle sorte que s'établisse à la fois un contact de guidage au coulissement relatif entre les faces 137 et 157 et un appui des pattes 146 par la face 137 sur la face 157, dans le sens d'un rapprochement vis-à-vis de l'axe 96, de telle sorte que le piston 147, lorsqu'il occupe sa position illustrée à la figure 12, s'oppose par sa face 157 à un fléchissement des pattes 146 vers l'axe 96 et, par conséquent, à un échappement de la pièce 120 vers l'arrière par rapport à la paroi tubulaire 103.

Vers l'arrière en référence au sens 2, la face 157 forme une saillie par rapport à la face 138 et se raccorde à une face 158 plane, annulaire de révolution autour de l'axe 96, laquelle face 158 est tournée vers l'arrière en référence au sens 2 et borde, dans le sens d'un éloignement par rapport à l'axe 96, un logement 159 aménagé à l'intérieur du piston 147 pour protéger les bornes, non référencées, de raccordement électrique de l'inflammateur 150 au capteur 42 non illustré.

Dans ces conditions, le fonctionnement du dispositif illustré à la figure 12 est le suivant.

Tant que le capteur 42 n'a pas été actionné, le dispositif se présente dans l'état illustré à la figure 12, les deux pièces 119 et 120 du bloc de butée 94 occupant leur position limite avant par rapport à la paroi 103 et le piston 147 occupant sa position limite avant par rapport à la pièce 120 du bloc de butée 94.

Alors, toute poussée F appliquée par le conducteur à la pédale10, non représentée, dans des conditions normales de fonctionnement du véhicule, se traduit par l'application à la biellette 15, suivant son axe 16, d'une poussée vers l'avant en référence au sens 2 et toute réaction de la biellette 15 en sens opposé se traduit par l'application d'une réaction transmise par la pédale 10, non représentée, au pied de l'utilisateur.

En effet, la transmission de ces efforts se traduit certes par une tendance des pièces 119 et 120 à reculer, en référence au sens 2, par rapport à la paroi tubulaire 103 mais la saillie 141 que les pattes 146 forment à l'intérieur de la gorge 142 s'y oppose.

Si, par contre, le capteur 42, non représenté, détecte un impact qui pourrait se traduire par l'application, entre le pied du conducteur et la pédale 10 non représentée , d'un effort F dépassant le seuil F 2, par exemple de 200 daN, il provoque l'alimentation de l'inflammateur 150 en électricité et par conséquent l'allumage de la composition pyrotechnique 153 dans la cavité 152.

Il s'ensuit un développement des gaz sous pression dans cette cavité 152, et, dans la mesure où la pièce 119 est immobilisée à l'encontre d'un coulissement vers l'avant, en référence au sens 2, à l'intérieur de la paroi 103, par appui sur la tête de rotule 126 elle-même en appui vers l'avant sur les languettes 130 de la pièce 128 solidarisée avec la paroi 103 par l'intermédiaire de la pièce 129, ce développement provoque le coulissement du piston 147 vers l'arrière, en référence au sens 2, à l'intérieur de la pièce 120, jusqu'à ce que l'épaulement 154 vienne buter vers l'arrière contre l'épaulement 134, ce qui immobilise le piston 147 par rapport à la pièce 120 et définit une position limite arrière du piston 147 par rapport à cette pièce.

De préférence, le contact établi entre les faces 151 et 133 et/ou 155 et 135 et/ou 157 et 137 s'accompagne d'une friction, de telle sorte que les positions limites avant et arrière du piston 147 par rapport à la pièce 120 constituent des positions stables , que le piston 147 ne peut quitter accidentellement, c'est-à-dire respectivement en dehors du développement gazeux résultant de la combustion de la composition pyrotechnique 153 et sous l'effet de l'inertie si, par exemple, le véhicule subit plusieurs impacts successifs par l'avant.

Lorsque le piston 147 a ainsi atteint sa position limite arrière, en référence à la pièce 120, le niveau de l'épaulement 156 coïncide avec celui de la face 138 ou est décalé vers l'arrière par rapport au niveau de la face 138, en référence 2, si bien que le piston 147 ne constitue plus d'obstacle à un fléchissement des pattes 146 vers l'axe 96.

Toutefois, le matériau constitutif de la pièce 120 oppose encore à ce fléchissement une résistance suffisante pour que le dispositif soit apte à transmettre sans ce fléchissement, c'est-à-dire sans recul des pièces 119 et 120 par rapport à la paroi tubulaire 103 en référence au sens 2, les efforts résultant de l'application à la pédale 10, non représentée, d'un effort F ne dépassant pas la valeur F1, par exemple de 80 daN, ou encore d'une réaction de la biellette 15 vers l'arrière, en référence au sens 2, ne se traduisant pas par l'application au pied, par la pédale, d'un effort dépassant ce seuil.

Si, par contre, le conducteur vient alors à appliquer à la pédale 10, non représentée, un effort F tendant à dépasser le seuil F 1, ou si la biellette 15 applique à la pièce 119, vers l'arrière en référence au sens 2, une poussée qui pourrait se traduire par l'application au pied, par la pédale 10, non représentée, d'un effort dépassant ce seuil, les pièces 119 et 120 entament d'un mouvement de recul, en référence au sens 2, par rapport à la paroi tubulaire 133 en provoquant un fléchissement progressif des pattes 146 vers l'axe 96, par l'application à la face 139 d'une poussée dans ce sens par la face 143, contre laquelle la face 139 prend appui avec un effet de friction similaire à celui que le rétrécissement 107 impose au bloc 94 dans le cas du mode réalisation décrit en référence à la figure 9, ou à celui que les rétrécissements 117 et 118 opposent aux tourillons 98 et 99 dans le cas du mode de réalisation décrit en référence aux figures 10 et 11.

Ainsi, le conducteur conserve la possibilité d'appliquer à la pédale 10, non illustrée, avec pour résultat un effet de freinage, une poussée F d'une valeur ne dépassant pas le seuil F1 mais, si ce seuil est dépassé, l'effet de coin appliqué par la face 143 à la face 139 provoque un escamotage des pattes 146 jusqu'à ce que la saillie 141 présente, au raccordement entre la face 139 et l'épaulement 140, un diamètre égal à celui de la face périphérique intérieure 125 de la paroi tubulaire 103, si bien que les pièces 120 et 119 s'échappent par l'arrière, en référence au sens 2, de cette paroi tubulaire 103 et que la liaison articulée entre la pédale 10, non représentée, et l'amplificateur de freinage 14, également non représenté, est interrompue.

A cet effet, la différence entre les diamètres respectifs de la face périphérique intérieure 155 du piston 147 et de la face intérieure périphérique 133 de la pièce 120 est au moins égale à la différence entre le diamètre de la face 131 de la pièce 120 et le diamètre que présente le raccordement entre la face tronconique 139 de celle-ci et son épaulement 140, ou diamètre maximal de la face 139, avant fléchissement des pattes 146.

Naturellement, d'autres modes de mise en oeuvre de l'invention peuvent encore être prévus sans que l'on sorte pour autant du cadre de celle-ci.

## Revendications

1. Dispositif de commande, au moyen d'une pédale (10), d'un organe (14) d'un véhicule automobile, notamment un organe de freinage, du type comportant
- des moyens (11, 13, 15, 26, 92) de liaison mécanique articulée entre la pédale (10) et d'une part une contrepartie (1) solidaire du véhicule, notamment une partie de plancher ou de tablier du véhicule, d'autre part ledit organe (14), lesdits moyens de liaison mécanique articulée (14, 13, 15, 26, 92) étant réalisés de telle sorte que l'application d'une poussée (F) de valeur déterminée, dans un sens déterminé, à la pédale (10) provoque un actionnement déterminé dudit organe (14) en mettant en oeuvre des contraintes de valeur respective déterminée et de sens respectif déterminé, dans des zones respectives déterminées (32, 50, 51, 87, 88, 94, 95) desdits moyens de liaison mécanique articulée (11, 13, 15, 26, 92),
- des moyens de sécurité passive (37, 42, 53, 91, 105, 115, 153) , comportant des moyens (42) de détection d'une décélération du véhicule, propres à émettre un signal de commande lorsque la valeur de ladite décélération excède un seuil prédéterminé, correspondant à un risque que la valeur de ladite poussée F excède un premier seuil déterminé F2, considéré comme dangereux pour le conducteur du véhicule, des moyens pyrotechniques (37, 53, 91, 105, 115, 153) commandés par ledit signal de commande pour provoquer un dégagement de gaz sous pression à la réception de celui-ci, et des moyens, commandés par ledit dégagement de gaz sous pression, pour favoriser alors un escamotage de la pédale (10) par affaiblissement de l'une desdites zones déterminées (32, 50, 51, 87, 88, 94, 95) vis-à-vis desdites contraintes respectives,
**caractérisé en ce que** les moyens pour favoriser un escamotage de la pédale comportent
- dans l'une desdites zones (32, 50, 51, 87 ; 88, 94, 95), un affaiblissement localisé (35, 43, 82, 107, 117, 118, 146) vis-à-vis desdites contraintes respectives, de telle sorte que ladite zone (32, 50, 51, 87, 88, 94, 95) soit en elle-même suffisamment résistante, mécaniquement, pour résister auxdites contraintes respectives lorsque la valeur de ladite poussée (F) est inférieure à un deuxième seuil déterminé (F1), inférieur au premier seuil déterminé (F2) et considéré comme maximal dans des conditions normales de fonctionnement, mais insuffisamment résistante, mécaniquement, pour résister auxdites contraintes respectives lorsque la valeur de ladite poussée (F) dépasse le deuxième seuil déterminé (F1),
- dans la même desdites zones (32, 50, 51, 87, 88, 94, 95), un renfort localisé (34, 48, 49, 83, 98, 99, 147) vis-à-vis desdites contraintes respectives, de telle sorte que, dans leur combinaison, ladite zone (32, 50, 51, 87, 88, 94, 95, 146) et le renfort (34, 48, 49, 83 98, 99, 147) soient suffisamment résistants, mécaniquement, pour résister auxdites contraintes respectives lorsque la valeur de ladite poussée (F) dépasse le premier seuil déterminé (F2),
et **en ce que** les moyens pyrotechniques (37, 53, 91, 105, 115, 153) sont propres à rendre ledit renfort (34, 48, 49, 83, 98, 99, 147) inopérant de façon commandée par ledit dégagement de gaz sous pression, de telle sorte qu'un freinage par application d'une poussée (F) de valeur inférieure au deuxième seuil déterminé (F1) reste possible après ledit dégagement, mais que l'application d'une poussée (F) de valeur supérieure au deuxième seuil déterminé (F1) après ledit dégagement provoque la rupture desdits moyens de liaison mécanique articulée (11, 13, 15, 26, 92) au niveau dudit affaiblissement localisé (35, 43, 82, 107, 117, 118, 146) et l'escamotage de la pédale (10).

2. Dispositif de commande selon la revendication 1, **caractérisé en ce que** lesdits moyens de liaison mécanique articulée (11, 13, 15, 26, 92) comportent un composant rigide (13) incluant une paroi (29) constituant l'une desdites zones (32), et **en ce que** ladite paroi (29) est dédoublée localement pour délimiter une cavité étanche susceptible de recevoir ledit gaz sous pression, en une première partie de paroi (34) susceptible de se rompre prioritairement sous l'effet dudit gaz sous pression et constituant ledit renfort (34) et en une deuxième partie de paroi (35) plus résistante que la première partie de paroi (34) à l'effet dudit gaz sous pression et constituant ledit affaiblissement localisé (35).

3. Dispositif de commande selon la revendication 2, **caractérisé en ce que** ledit composant rigide (13) est une chaise (13) solidaire de ladite contrepartie (1) et portant la pédale (10) de façon articulée, **en ce que** ledit véhicule automobile comporte par ailleurs un support de colonne de direction (7) passant à proximité immédiate de ladite chaise (13) et susceptible d'accomplir un mouvement de rapprochement par rapport à celle-ci en cas de déformation du véhicule automobile consécutivement à un impact, notamment par l'avant de celui-ci, et **en ce que** ladite chaise (13) et le support de colonne de direction (7) sont conformés de telle sorte que ledit mouvement de rapprochement se traduise par un contact mutuel augmentant lesdites contraintes dans ladite zone (32) pour favoriser une rupture de ladite deuxième partie de paroi (35) notamment après rupture de ladite première partie de paroi (32).

4. Dispositif de commande selon la revendication 1, **caractérisé en ce que** lesdits moyens de liaison mécanique articulée (11, 12, 13, 15, 26, 92) comportent deux composants rigides (22, 23, 55, 65, 67) localement juxtaposés mutuellement suivant une direction déterminée perpendiculaire à un sens déterminé de transmission des contraintes respectives de l'un à l'autre, susceptibles de subir un déplacement relatif dans ledit sens mais liés mutuellement à l'encontre d'un tel déplacement relatif par un arbre (26), respectivement une goupille (78), présentant un axe (12, 79) orienté suivant ladite direction, ledit arbre (26) ou ladite goupille (78) comportant au moins un tronçon (44, 45, 84, 85) en appui dans ledit sens sur l'un (22, 23, 65) desdits composants et un tronçon (46 , 86) d'appui de l'autre (55 , 67) desdits composants dans ledit sens et constituant ladite une (50, 51, 88) desdites zones à la transition entre lesdits tronçons (44, 45, 46 85, 86), et **en ce que** ledit arbre (26) ou ladite goupille (78) comporte d'une part une partie radialement extérieure (43, 82), de forme tubulaire, s'étendant de l'un à l'autre desdits tronçons (44, 45, 46, 85, 86), et d'autre part une partie radialement intérieure (47, 82) constituant ledit renfort au niveau de ladite transition (50, 51, 88), alors que la partie radialement extérieure (43, 82) constitue ledit affaiblissement au niveau de celle-ci, et délimitant à l'intérieur de ladite partie radialement extérieure (43 , 82) une cavité étanche (52, 90) susceptible de recevoir ledit gaz sous pression, ladite partie radialement intérieure (47, 83) étant susceptible d'être chassée du niveau de ladite transition, sous l'effet dudit gaz sous pression.

5. Dispositif de commande selon la revendication 4, **caractérisé en ce que** lesdits composants (22, 23, 55) sont articulés autour dudit axe (12) au moyen dudit arbre (26).

6. Dispositif de commande selon la revendication 4, **caractérisé en ce que** lesdits composants (65, 67) sont montés télescopiquement l'un par rapport à l'autre suivant une direction propre (16) qui correspond audit sens déterminé de transmission des contraintes respectives de l'un à l'autre et liés mutuellement, à l'encontre d'un déplacement relatif dans ledit sens, par ladite goupille (78).

7. Dispositif de commande selon la revendication 6, **caractérisé en ce qu'**il comporte en outre un ressort (75) de sollicitation élastique de l'un desdits composants (65, 67) par rapport à l'autre dans ledit sens, de façon à provoquer un effacement de la pédale (10) après rupture de la partie radialement extérieure de la goupille (78).

8. Dispositif de commande selon l'une quelconque des revendications 6 et 7, **caractérisé en ce qu'**il comporte en outre des moyens (68, 11) de butée mutuelle desdits composants (67, 68) après franchissement d'une course longitudinale déterminée (93) de l'un par rapport à l'autre dans ledit sens de façon à conserver une possibilité d'actionnement de l'organe de freinage (14) par la pédale (10) après rupture de la partie radialement extérieure (82) de la goupille (78).

9. Dispositif de commande selon l'une quelconque des revendications 4 à 8, **caractérisé en ce que** ladite partie radialement extérieure (43, 82) comporte une amorce de rupture (61, 62) au niveau de ladite transition (50, 51, 88).

10. Dispositif de commande selon l'une quelconque des revendications 1 à 9, **caractérisé en ce qu'**il comporte des moyens (107, 117, 118) pour freiner ledit escamotage de la pédale (10).

11. Dispositif de commande selon la revendication 1, **caractérisé en ce que** les dits moyens de liaison mécanique articulée(11, 13, 15, 26, 92) comportent deux composants rigides (93, 103) localement juxtaposés mutuellement, suivant une direction déterminée perpendiculaire à un sens déterminé de transmission des contraintes respectives de l'un à l'autre, guidés mutuellement vis-à-vis d'un déplacement relatif dans ledit sens mais liés mutuellement, à l'encontre d'un tel déplacement relatif, d'une part par effet de friction, dans ledit sens, dans une zone (107, 117, 118, 146) de contact mutuel constituant ladite une desdites zones et d'autre part par effet de butée, dans ledit sens, d'une saillie (98, 99, 141) qu'un premier desdits composants présente suivant ladite direction contre une contrepartie (109, 110, 142) que présente le second (103) desdits composants, et **en ce que** les moyens pyrotechniques (105, 115, 153) sont agencés de telle sorte que ledit dégagement de gaz sous pression provoque la disparition dudit effet de butée.

12. Dispositif de commande selon la revendication 11, **caractérisé en ce que** le ledit premier composant (94) et/ou la dite saillie (98, 99) délimitent une cavité étanche (104) susceptible de recevoir ledit gaz sous pression et **en ce que** ladite saillie (98, 99) est susceptible de se détacher dudit premier composant (94) sous l'effet dudit gaz sous pression.

13. Dispositif de commande selon la revendication 11, **caractérisé en ce que** ledit second composant (103) et/ou la dite contrepartie (109, 110) délimitent une cavité étanche (111) susceptible de recevoir ledit gaz sous pression et **en ce que** ladite contrepartie (109, 110) est susceptible de s'escamoter vis-à-vis de ladite saillie (98, 99) sous l'effet du dit gaz sous pression.

14. Dispositif de commande selon la revendication 11, **caractérisé en ce que** ladite saillie (141) et/ou la dite contrepartie (142) présentent une forme en coin , **en ce qu'**une première (142) d'entre elles est liée rigidement au composant correspondant (103) alors que la seconde (141) d'entre elles est liée au composant correspondant (94) de façon à pouvoir s'escamoter dans le sens de la disparition dudit effet de butée par rapport à ladite première (142), en opposant ledit effet de friction par contact avec celle-ci, et **en ce que** le composant (94) correspondant à ladite seconde (141) comporte un piston (148) mobile entre une position de retenue de ladite seconde (141) dans une position correspondant audit effet de butée et une position de libération de ladite seconde vis-à-vis d'un escamotage dans le sens de la disparition dudit effet de butée et délimite avec ledit piston (147) une cavité étanche (152) susceptible de recevoir ledit gaz sous pression, le piston (147) étant susceptible de passer de sa position de retenue à sa position de libération sous l'effet dudit gaz sous pression.

## Claims

1. Device for controlling, by means of a pedal (10), a motor vehicle member (14), particularly a braking member, of the type comprising:
- means (11, 13, 15, 26, 92) of articulated mechanical connection between the pedal (10) and, on the one hand, a counterpart (1) secured to the vehicle, particularly a part of the floor or the bulkhead of the vehicle and, on the other hand, the said member (14), the said means of articulated mechanical connection (14, 13, 15, 26, 92) being produced in such a way that the application of a thrust (F) of determined value in a determined direction to the pedal (10) causes determined actuation of the said member (14) involving stresses of determined respective value and determined respective direction in determined respective regions (32, 50, 51, 87, 88, 94, 95) of the said means of articulated mechanical connection (11, 13, 15, 26, 92),
- passive safety means (37, 42, 53, 91, 105, 115, 153) comprising means (42) for detecting deceleration of the vehicle, which means are able to emit a control signal when the value of the said deceleration exceeds a predetermined threshold corresponding to a risk that the value of the said thrust F might exceed a determined first threshold F2, considered as dangerous to the driver of the vehicle, pyrotechnic means (37, 53, 91, 105, 115, 153) controlled by the said control signal to cause pressurized gas to be released on receipt of this signal, and means, controlled by the said release of pressurized gas, to then encourage retraction of the pedal (10) by weakening of one of the said determined regions (32, 50, 51, 87, 88, 94, 95) in the face of the said respective stresses,
**characterized in that** the means for encouraging pedal retraction comprise:
- in one of the said regions (32, 50, 51, 87; 88, 94, 95), a localized weakening (35, 43, 82, 107, 117, 118, 146) in the face of the said respective stresses so that the said region (32, 50, 51, 87, 88, 94, 95) is, in itself, mechanically strong enough to withstand the said respective stresses when the value of the said thrust (F) is below a second determined threshold (F1) lower than the first determined threshold (F2) and considered to be maximum under normal operating conditions, but not mechanically strong enough to withstand the said respective stresses when the value of the said thrust (F) exceeds the second determined threshold (F1),
- in the same one of the said regions (32, 50, 51, 87, 88, 94, 95), a localized reinforcement (34, 48, 49, 83, 98, 99, 147) with respect to the said respective stresses so that, in their combination, the said region (32, 50, 51, 87, 88, 94, 95, 146) and the reinforcement (34, 48, 49, 83, 98, 99, 147) are mechanically strong enough to withstand the said respective stresses when the value of the said thrust (F) exceeds the first determined threshold (F2),
and **in that** the pyrotechnic means (37, 53, 91, 105, 115, 153) are able to render the said reinforcement (34, 48, 49, 83, 98, 99, 147) inoperative in a way that is controlled by the said release of pressurized gas so that braking through application of a thrust (F) of a value lower than the second determined threshold (F1) remains possible after the said release, but so that applying a thrust (F) of a value higher than the second determined threshold (F1) after the said release causes the said means of articulated mechanical connection (11, 13, 15, 26, 92) to break at the localized weakening (35, 43, 82, 107, 117, 118, 146) and the pedal (10) to retract.

2. Control device according to Claim 1, **characterized in that** the said means of articulated mechanical connection (11, 13, 15, 26, 92) comprise a rigid component (13) including a wall (29) constituting one of the said regions (32), and **in that** the said wall (29) is locally divided to delimit a sealed cavity able to receive the said pressurized gas, into a first wall part (34) able to break as a matter of priority under the effect of the said pressurized gas and which constitutes the said reinforcement (34) and into a second wall part (35), more able than the first wall part (34) to withstand the effect of the said pressurized gas and constituting the said localized weakening (35).

3. Control device according to Claim 2, **characterized in that** the said rigid component (13) is a bearer (13) secured to the said counterpart (1) and bearing the pedal (10) in an articulated way, **in that** the said motor vehicle also comprises a steering column support (7) passing in close proximity to the said bearer (13) and able to accomplish a movement towards the latter in the event of deformation of the motor vehicle as the result of an impact, particularly from the front thereof, and **in that** the said bearer (13) and the steering column support (7) are shaped in such a way that the said closing movement results in mutual contact increasing the said stresses in the said region (32) to encourage the said second wall part (35) to break particularly once the said first wall part (32) has broken.

4. Control device according to Claim 1, **characterized in that** the said means of articulated mechanical connection (11, 12, 13, 15, 26, 92) comprise two rigid components (22, 23, 55, 65, 67) juxtaposed with each other locally in a determined direction perpendicular to a determined direction in which the respective stresses are transmitted from one to the other, which are able to undergo a relative displacement in the said direction but which are connected together against such a relative displacement by a shaft (26) or a pin (78) respectively, having an axis (12, 79) directed in the said direction, the said shaft (26) or the said pin (78) having at least one portion (44, 45, 84, 85) bearing in the said direction on one (22, 23, 65) of the said components and a portion (46, 86) for the bearing of the other (55, 67) of the said components in the said direction and constituting the said one (50, 51, 88) of the said regions at the transition between the said portions (44, 45, 46, 85, 86), and **in that** the said shaft (26) or the said pin (78) comprises, on the one hand, a radially external part (43, 82) of tubular shape, extending from one of the said portions (44, 45, 46, 85, 86) to the other and, on the other hand, a radially internal part (47, 82) constituting the said reinforcement at the said transition (50, 51, 88), while the radially external part (43, 82) constitutes the said weakening thereat, and delimiting inside the said radially external part (43, 82) a sealed cavity (52, 90) able to receive the said pressurized gas, the said radially internal part (47, 83) being able to be driven from the level of the said transition under the effect of the said pressurized gas.

5. Control device according to Claim 4, **characterized in that** the said components (22, 23, 55) are articulated about the said axis (12) by means of the said shaft (26).

6. Control device according to Claim 4, **characterized in that** the said components (65, 67) are mounted telescopically one with respect to the other in an inherent direction (16) which corresponds to the said determined direction of transmission of the respective stresses from one to the other and connected together, against relative displacement in the said direction, by the said pin (78).

7. Control device according to Claim 6, **characterized in that** it further comprises a spring (75) elastically urging one of the said components (65, 67) with respect to the other in the said direction so as to cause the pedal (10) to move out of the way after the radially external part of the pin (78) breaks.

8. Control device according to either one of Claims 6 and 7, **characterized in that** it further comprises mutual stop means (68, 11) for the said components (67, 68) once they have covered a determined longitudinal travel (93) of the one with respect to the other in the said direction so as to maintain a possibility of actuating the braking member (14) using the pedal (10) after the radially external part (82) of the pin (78) has broken.

9. Control device according to any one of Claims 4 to 8, **characterized in that** the said radially external part (43, 82) comprises a rupture initiator (61, 62) at the said transition (50, 51, 88).

10. Control device according to any one of Claims 1 to 9, **characterized in that** it comprises means (107, 117, 118) for slowing the said retraction of the pedal (10).

11. Control device according to Claim 1, **characterized in that** the said means of an articulated mechanical connection (11, 13, 15, 26, 92) comprise two rigid components (93, 103) mutually locally juxtaposed in a determined direction perpendicular to a determined direction of transmission of the respective stresses from one to the other, these being guided with respect to each other in respect of a relative displacement in the said direction but connected together, against such a relative displacement, on the one hand by a friction effect, in the said direction, in a region (107, 117, 118, 146) of mutual contact constituting the said one of the said regions and, on the other hand, via a stop effect, in the said direction, of a projection (98, 99, 141) that a first of the said components exhibits in the said direction against a counterpart (109, 110, 142) exhibited by the second (103) of the said components, and **in that** the pyrotechnic means (105, 115, 153) are arranged in such a way that the said release of pressurized gas causes the said stop effect to disappear.

12. Control device according to Claim 11, **characterized in that** the said first component (94) and/or the said projection (98, 99) delimit a sealed cavity (104) able to receive the said pressurized gas and **in that** the said projection (98, 99) is able to detach from the said first component (94) under the effect of the said pressurized gas.

13. Control device according to Claim 11, **characterized in that** the said second component (103) and/or the said counterpart (109, 110) delimit a sealed cavity (111) able to receive the said pressurized gas and **in that** the said counterpart (109, 110) is able to retract with respect to the said projection (98, 99) under the effect of the said pressurized gas.

14. Control device according to Claim 11, **characterized in that** the said projection (141) and/or the said counterpart (142) have a wedge shape, **in that** a first (142) of them is connected rigidly to the corresponding component (103) while the second (141) of them is connected to the corresponding component (94) in such a way as to be able to retract in the direction of disappearance of the said stop effect with respect to the said first (142), opposing the said friction effect by contact therewith, and **in that** the component (94) corresponding to the said second (141) comprises a piston (148) able to move between a position of retention of the said second (141) in a position corresponding to the said stop effect and a position of release of the said second with respect to a retraction in the direction of disappearance of the said stop effect and delimits, with the said piston (147), a sealed cavity (152) able to receive the said pressurized gas, the piston (147) being able to move from its position of retention to its position of release under the effect of the said pressurized gas.

## Patentansprüche

1. Steuervorrichtung, mittels eines Pedals (10), eines Organs (14) eines Automobilfahrzeuges, insbesondere eines Bremsorgans, die folgendes umfaßt:
- Mittel zur gelenkigen mechanischen Verbindung (11, 13, 15, 26, 92) zwischen dem Pedal (10) und einerseits einem fest mit dem Fahrzeug verbundenen Gegenabschnitt (1), insbesondere einem Boden- oder Grundplattenabschnitt des Fahrzeugs, und andererseits dem Organ (14), wobei die Mittel zur gelenkigen mechanischen Verbindung (14, 13, 15, 26, 92) derart realisiert sind, daß das Anlegen einer Schubkraft (F) mit vorbestimmtem Wert in eine vorbestimmte Richtung auf das Pedal (10) eine vorbestimmte Wirkung des Organs (14) hervorruft, indem Belastungen mit einem jeweiligen vorbestimmten Wert und einer jeweiligen vorbestimmten Richtung in jeweiligen vorbestimmten Zonen (32, 50, 51, 87, 88, 94, 95) der Mittel zur gelenkigen mechanischen Verbindung (11, 13, 15, 26, 92) angewandt werden,
- passive Sicherheitsmittel (37, 42, 53, 91, 105, 115, 153), die Mittel (42) zur Detektion einer Verzögerung des Fahrzeugs aufweisen, die geeignet sind, ein Steuersignal auszusenden, wenn der Wert der Verzögerung einen vorbestimmten Schwellwert überschreitet, der einem Risiko entspricht, daß der Wert der Schubkraft F einen ersten vorbestimmten Schwellwert F2 überschreitet, der für den Fahrer des Fahrzeugs als gefährlich angesehen wird, und von dem Steuersignal gesteuerte pyrotechnische Mittel (37, 53, 91, 105, 115, 153) zum Bewirken einer Gasfreisetzung unter Druck bei Empfang dieses Steuersignals, und Mittel, die von der Gasfreisetzung unter Druck gesteuert sind, um ein Einziehen des Pedals (10) durch Abschwächung einer der vorbestimmten Zonen (32, 50, 51, 87, 88, 94, 95) gegenüber der jeweiligen Belastungen zu begünstigen,
**dadurch gekennzeichnet, daß** die Mittel zum Begünstigen eines Einziehens des Pedals folgendes umfassen:
- in einer der Zonen (32, 50, 51, 87, 88, 94, 95) eine lokalisierte Abschwächung (35, 43, 82, 107, 117, 118, 146) gegenüber der jeweiligen Belastungen, derart, daß die Zone (32, 50, 51, 87, 88, 94, 95) für sich genügend mechanisch widerstandsfähig ist, um den jeweiligen Belastungen zu widerstehen, wenn der Wert der Schubkraft (F) kleiner als ein vorbestimmter zweiter Schwellwert (F1) ist, der kleiner als der vorbestimmte erste Schwellwert (F2) ist, und als maximal unter normalen Betriebszuständen angesehen wird, jedoch nicht genügend mechanisch widerstandsfähig, um den jeweiligen Belastungen zu widerstehen, wenn der Wert der Schubkraft (F) den zweiten vorbestimmten Schwellwert (F1) überschreitet,
- in der gleichen Zone der Zonen (32, 50, 51, 87, 88, 94, 95) eine lokalisierte Verstärkung (34, 48, 49, 83, 98, 99, 147) gegenüber den jeweiligen Belastungen, derart, daß in ihrer Kombination die Zone (32, 50, 51, 87, 88, 94, 94, 95, 146) und die Verstärkung (34, 48, 49, 83, 98, 99, 147) genügend mechanisch widerstandsfähig sind, um den jeweiligen Belastungen zu widerstehen, wenn der Wert der Schubkraft (F) den ersten vorbestimmten Schwellwert (F2) überschreitet,
- und daß die pyrotechnischen Mittel (37, 53, 91, 105, 115, 153) geeignet sind, die Verstärkung (34, 48, 49, 83, 88, 99, 147) auf eine über die Gasfreisetzung unter Druck gesteuerte Weise betriebsunfähig zu machen, derart, daß eine Bremsung durch Anlegen einer Schubkraft (F) mit einem Wert kleiner als der zweite vorbestimmte Schwellwert (F1) nach der Freisetzung möglich bleibt, jedoch das Anlegen einer Schubkraft (F) mit einem Wert größer als der zweite vorbestimmte Schwellwert (F1) nach der Freisetzung den Bruch der Mittel zur gelenkigen mechanischen Verbindung (11, 13, 15, 26, 92) in Höhe der lokalisierten Abschwächung (35, 43, 82, 107, 117, 118, 146) und das Einziehen der Pedale (10) hervorruft.

2. Steuervorrichtung nach Anspruch 1, **dadurch gekennzeichnet, daß** die Mittel zur gelenkigen mechanischen Verbindung (11, 13, 15, 26, 92) eine starre Komponente (13) umfassen, die eine Wandung (29) aufweist, die eine der Zonen (32) bildet, und daß die Wandung (29) lokal halbiert ist, um eine dichte Kavität zu begrenzen, die zur Aufnahme des Gases unter Druck geeignet ist, in einen ersten Abschnitt der Wandung (34), der zum vorrangigen Brechen unter Wirkung des Gases unter Druck geeignet ist und die Verstärkung (34) bildet, und in einen zweiten Abschnitt der Wandung (35), der widerstandsfähiger als der erste Abschnitt der Wandung (34) gegenüber der Wirkung des Gases unter Druck ist und die lokalisierte Abschwächung (35) bildet.

3. Steuervorrichtung nach Anspruch 2, **dadurch gekennzeichnet, daß** die starre Komponente (13) ein mit dem Gegenabschnitt (1) fest verbundener Lagerbock (13) ist, der die Pedale (10) gelenkig trägt, und daß das Automobilfahrzeug darüber hinaus einen Lenksäulenträger (7) umfaßt, der in unmittelbarer Nähe des Lagerbocks (13) verläuft und geeignet ist, diesem gegenüber eine Annäherungsbewegung durchzuführen, im Falle einer mit einem Aufprall verbundenen Deformation des Automobilfahrzeuges, insbesondere eines Frontalaufpralls, und dadurch, daß der Lagerbock (13) und der Lenksäulenträger (7) derart gestaltet sind, daß die Annäherungsbewegung sich in einen gegenseitigen Kontakt übersetzt, der die Belastungen der Zone (32) erhöht, um einen Bruch des zweiten Abschnitts der Wandung (35), insbesondere nach einem Bruch des ersten Abschnitts der Wandung (32) zu begünstigen.

4. Steuervorrichtung nach Anspruch 1, **dadurch gekennzeichnet, daß** die Mittel zur gelenkigen mechanischen Verbindung (11, 12, 13, 15, 26, 92) zwei starre Komponenten (22, 23, 55, 65, 67) umfassen, die lokal aneinander gelegt sind, einer vorbestimmten Richtung folgend, die senkrecht zu einer vorbestimmten Übertragungsrichtung der jeweiligen Belastungen zueinander ist, die geeignet sind, eine Relativverschiebung in der Richtung zu erfahren, die jedoch miteinander im Gegensatz zu einer solchen Relativverschiebung mittels einer Welle (26) verbunden sind, bzw. eines Stiftes (78), die eine Achse (12, 79) aufweist, die entlang der Richtung orientiert ist, wobei die Welle (26) oder der Stift (78) wenigstens einen Teilabschnitt (44, 45, 84, 85), der sich in der Richtung an die eine (22, 23, 65) der Komponenten stützt, und einen Teilabschnitt (46, 68) aufweist, an den sich die aridere (55, 67) der Komponenten in der Richtung stützt, und der die eine (50, 51, 88) der Zonen am Übergang zwischen den Teilabschnitten (44, 45, 46, 85, 86) bildet, und daß die Welle (26) oder der Stift (78) einerseits einen röhrenförmigen radial nach außen stehenden Abschnitt (434, 82), der sich von dem einen zu dem anderen der Teilabschnitte (44, 45, 46, 85, 86) erstreckt, und andererseits einen radial nach innen stehenden Abschnitt (47, 82) umfaßt, der die Verstärkung in Höhe des Übergangs (50, 51, 88) bildet, während der radial nach außen stehende Abschnitt (43, 82) die Abschwächung in Höhe dieser bildet, und im Inneren des radial nach außen stehenden Abschnitts (43, 82) eine dichte Kavität (52, 90) begrenzt, die geeignet ist, das Gas unter Druck aufzunehmen, wobei der radial nach innen stehende Abschnitt (47, 83) geeignet ist, in Höhe des Übergangs weggetrieben zu werden, unter Wirkung des Gases unter Druck.

5. Steuervorrichtung nach Anspruch 4, **dadurch gekennzeichnet, daß** die Komponenten (22, 23, 55) um die Achse (12) mittels der Welle (26) angelenkt sind.

6. Steuervorrichtung nach Anspruch 4, **dadurch gekennzeichnet, daß** die Komponenten (65, 67) teleskopartig gegeneinander entlang einer geeigneten Richtung (16) zusammengebaut sind, die der vorbestimmten Übertragungsrichtung der jeweiligen Belastungen zueinander entspricht, und mittels des Stiftes (78) miteinander verbunden sind, im Gegensatz zu einer Relativverschiebung in die Richtung.

7. Steuervorrichtung nach Anspruch 6, **dadurch gekennzeichnet, daß** sie außerdem eine Feder (75) für die elastische Belastung einer der Komponenten (65, 67) bezüglich der anderen in der Richtung umfaßt, um ein Rückstellen der Pedale (10) nach Bruch des radial nach außen stehenden Abschnitts des Stiftes (78) zu bewirken.

8. Steuervorrichtung nach einem der Ansprüche 6 und 7, **dadurch gekennzeichnet, daß** sie außerdem Mittel (68, 11) für den gegenseitigen Anschlag der Komponenten (67, 68) nach Durchlaufen eines vorbestimmten Längsweges (93) gegeneinander in der Richtung umfaßt, um eine Betätigungsmöglichkeit des Bremsorgans (14) durch die Pedale (10) nach Bruch des radial nach außen stehenden Abschnitts (82) des Stiftes (78) aufrechtzuerhalten.

9. Steuervorrichtung nach einem der Ansprüche 4 bis 8, **dadurch gekennzeichnet, daß** der radial nach außen stehende Abschnitt (43, 82) eine Bruchausgangsstelle (61, 62) in Höhe des Übergangs (50, 51, 88) umfaßt.

10. Steuervorrichtung nach einem der Ansprüche 1 bis 9, **dadurch gekennzeichnet, daß** sie Mittel (107, 117, 118) zum Bremsen des Einziehens der Pedale (10) umfaßt.

11. Steuervorrichtung nach Anspruch 1, **dadurch gekennzeichnet, daß** die Mittel zur gelenkigen mechanischen Verbindung (11, 13, 15, 26, 92) zwei starre Komponenten (93, 103) umfassen, die lokal aneinander anliegen, einer vorbestimmten Richtung folgend, die senkrecht zu einer vorbestimmten Übertragungsrichtung der jeweiligen Belastungen zueinander ist, und gegeneinander gegenüber einer Relatiwerschiebung in der Richtung geführt sind, jedoch miteinander verbunden sind, im Gegensatz zu einer solchen Relativverschiebung, einerseits durch eine Reibungswirkung in der Richtung in einer Zone (107, 117, 118, 146) mit gegenseitigem Kontakt, die die eine der Zonen bildet, und andererseits über eine Anschlagwirkung in der Richtung einer Auskragung (98, 99, 141), die eine erste der Komponenten entlang der Richtung aufweist, gegen einen Gegenabschnitt (109, 110, 142), den die zweite (103) der Komponenten aufweist, und daß die pyrotechnischen Mittel (105, 115, 153) derart aufgebaut sind, daß die Gasfreisetzung unter Druck das Verschwinden der Anschlagwirkung bewirkt.

12. Steuervorrichtung nach Anspruch 11, **dadurch gekennzeichnet, daß** die erste Komponente (94) und/oder die Auskragung (98, 99) eine dichte Kavität (104) begrenzen, die geeignet ist, das Gas unter Druck aufzunehmen, und daß die Auskragung (98, 99) geeignet ist, sich von der ersten Komponente (94) unter Wirkung des Gases unter Druck zu lösen.

13. Steuervorrichtung nach Anspruch 11, **dadurch gekennzeichnet, daß** die zweite Komponente (103) und/oder der Gegenabschnitt (109, 110) eine dichte Kavität (111) begrenzen, die geeignet ist, das Gas unter Druck aufzunehmen, und daß der Gegenabschnitt (109, 110) geeignet ist, sich bezüglich der Auskragung (98, 99) unter Wirkung des Gases unter Druck einzuziehen.

14. Steuervorrichtung nach Anspruch 11, **dadurch gekennzeichnet, daß** die Auskragung (141) und/oder der Gegenabschnitt (142) eine Keilform aufweisen, und daß ein erster (142) von diesen fest mit der entsprechenden Komponente (103) verbunden ist, während der zweite (141) von diesen mit der entsprechenden Komponente (194) derart verbunden ist, daß er sich in Richtung des Verschwindens der Anschlagwirkung bezüglich des ersten (142) einziehen kann, indem er die Reibungswirkung durch Kontakt mit diesem entgegenstellt, und daß die dem zweiten (141) entsprechende Komponente (94) einen Kolben (148) aufweist, der zwischen einer Rückhalteposition des zweiten (141) in einer der Anschlagwirkung entsprechenden Position und einer Freigabeposition des zweiten gegenüber einem Einziehen in der Richtung des Verschwindens der Anschlagwirkung beweglich ist, und mit dem Kolben (147) eine dichte Kavität (152) begrenzt, die geeignet ist, das Gas unter Druck aufzunehmen, wobei der Kolben (147) geeignet ist, sich von seiner Rückhalteposition in seine Freigabeposition unter Wirkung des Gases unter Druck zu bewegen.
